# EUROPEAN PATENT SPECIFICATION

(11) **EP 1 931 112 B1**
(45) Date of publication and mention of the grant of the patent: **29.07.2009**
(21) Application number: 07253636.0
(22) Date of filing: 12.09.2007
(51) Int. Cl.: H04L 29/08

(54) **Information processing device, download method, download interruption method, download resuming method, and program**
Informationsverarbeitungsvorrichtung, Download-Verfahren, Download-Unterbrechungsverfahren, Download-Wiederaufnahmeverfahren und Programm
Dispositif de traitement d' informations, procédé de téléchargement, procédé d'interruption du téléchargement, procédé de reprise du téléchargement, et programme

(30) Priority: 15.09.2006 JP 2006251769
(43) Date of publication of application: 11.06.2008
(73) Proprietor: Sony Corporation, Minato-ku Tokyo 108-0075 (JP)
(72) Inventor: Ebihara, Munetake c/o Sony Corporation, Tokyo 108-0075 (JP); Yoshimura, Koji c/o Sony Corporation, Tokyo 108-0075 (JP); Kuno, Hiroshi c/o Sony Corporation, Tokyo 108-0075 (JP); Maeda, Hiroshi c/o Sony Corporation, Tokyo 108-0075 (JP); Sato, Hideki c/o Sony Corporation, Tokyo 108-0075 (JP)
(74) Representative: Robinson, Nigel Alexander Julian

(56) References cited:
- US-A1- 2002 099 798
- US-A1- 2004 117 459
- US-A1- 2005 245 243
- US-B1- 6 658 247

## Description

The present invention relates to an information processing device, download method, download interruption method, download resuming method, and program.

During the process of downloading content from a server to a terminal, interruption of the download can occur as a result of user instructions or a communication line being disconnected and so forth. Traditional Internet Web browser applications or the like implement a function for interrupting and resuming a download. Such applications are arranged to manage the file state during downloading, information of the download source, and so forth, using a work directory and database unique to each application. For example, Japanese Unexamined Patent Application Publication No. 2001-256195 discloses a terminal download program (application) which transmits the size of received data to a server and resumes the download in the event that a download of content or a content key is interrupted.

However, with the download interruption/resume method used traditionally as described above, only the application performing the download can handle information necessary for resuming the download or interrupted file, and data in a shared format between multiple applications has not been managed. Therefore, applying a method of download interruption/resume relying on the traditional application function to record a downloaded file on a removable storage media has been difficult. That is to say, a file stored on a removable storage media has had the following problems due to being referenced by multiple devices or applications.

For example, in the event of a certain device A moving a file A which is in process of being downloaded to another device B via a removable storage media, the file A during the process of being downloaded cannot be recognized at the other device B. Therefore, the file A has been downloaded as a duplicate at the other device B. Also, the other device B overwrites the file A in process of being downloaded with another file B having the same name but different content, so when the file B is returned to the first device A via the removable storage media and the download of file A is resumed at the device A, the other file B downloaded at the other device B could be destroyed.

Also, maintaining compatibility of a work directory or file name at the time of downloading, in addition to securing compatibility of directory or file name determining regulation between multiple applications has been extremely difficult.

US 2004/0117459 A1 describes a method and system for a network having multimedia messaging service (MMS) capability allowing downloading of one or more multimedia messages (MMs) from a server to a client. The client and/or the server is capable of generating commands for suspending and resuming downloading of the multimedia message. When the client or server generates a command for suspending a current downloading of a multimedia message, the server suspends the downloading of the multimedia message, and a marker is generated for marking the position of suspending the multimedia message. When the client or server generates a command for resuming the suspended downloading of the multimedia message, the server resumes the downloading from the position of suspending marked by the marker. The client when receiving additional subsequent portions of the multimedia message after generating a marker for marking the position of suspending the multimedia message, stores these additional subsequent portions of the multimedia message, generates a new marker pointing to the end of the received additional subsequent portions of the multimedia message, and stores the new marker.

US 5,658,247 B1 describes a data reception terminal apparatus and a data receiving method suitable for a music delivering system using a portable telephone terminal apparatus. When data is downloaded with a portable telephone terminal apparatus, received data is divided as blocks. Each block is received with a data reception channel. Whenever each block is received, a received call is detected with a received call detecting channel. Thus, while data is being downloaded, a received call can be detected. When the downloading operation of data is suspended, information that represents the next data position of data that has been downloaded is stored. When the downloading operation is resumed, the data is downloaded from the next data position of the data that has been downloaded and stored. Thus, the data downloading operation is resumed from the next data position of the data that has been downloaded.

US 2002/0099798 A1 describes a file transfer method in which in which a client requests a file from a server and the server sends to the client one or more data segments which data segments together constitute content of the requested file and additional content provided by a service provider. A provider of download files, and in particular audio files, may add additional material such as advertising material to the download content. Targeting of the material to a particular user might be achieved by asking the user to provide information about their interests, and selecting for inclusion those advertisements that most closely accord with the user's a preferences. To reduce storage requirements, the server may store a virtual file reference for each user and construct a customised file dynamically.

US 2005/0245243 describes a system and method that categorizes audio content to be delivered over wireless networks such that the categories correspond to a different delivery priority. In an illustrative three-category implementation, category 1 content has the highest delivery priority for delivery as soon as possible, category 2 content has the next highest delivery priority for delivery, and category 3 content, such as music, audio books and so on, has the least urgent delivery priority. The categories are used to coordinate audio content delivery to efficiently use available bandwidth and network resources by delivering content at off-peak times. The invention also allows the downloading process to be interruptible such that it can be resumed at about the point of an interruption to conserve resources.

Thus, the present invention has been made with consideration to the above-described problems, and it is desirable for at least preferred embodiments of the present invention to provide a new and improved information processing device, download method, download interruption method, download resuming method, and program which can improve compatibility between interruption and resuming of the download in the case of downloading a content file from multiple devices or applications on a removable storage media.

Aspects of the invention are set out in the appended claims.

According to embodiments of the present invention, in the event of downloading a content file to a removable storage media with multiple devices or applications, compatibility of interruption and resuming of such download can be improved.

Embodiments of the invention will now be described, by way of example only, with reference to the accompanying drawings in which:
Fig. 1 is an explanatory diagram illustrating the configuration of a content distribution system according to an example embodiment of the present invention;
Fig. 2 is an explanatory diagram illustrating the data configuration of an interrupted content file according to the embodiment;
Fig. 3 is a block diagram illustrating the configuration of a portable information processing device according to the embodiment;
Fig. 4 is a block diagram illustrating the function configuration of the portable information processing device and content distribution server according to the embodiment;
Fig. 5 is a flowchart illustrating an example of a download interruption method according to the embodiment;
Fig. 6A is an explanatory diagram illustrating the data configuration of a content file according to the embodiment;
Fig. 6B is an explanatory diagram illustrating the data configuration of a content file according to the embodiment;
Fig. 7 is a flowchart illustrating another example of a download interruption method according to the embodiment;
Fig. 8 is an explanatory diagram illustrating the data configuration of a content file according to the embodiment;
Fig. 9 is a flowchart illustrating a download resuming method according to the embodiment;
Fig. 10 is an explanatory diagram illustrating an example of a display screen at the time of content selection according to the embodiment;
Fig. 11 is a sequence diagram illustrating a download method of a particular picture content file according to the embodiment;
Fig. 12A is an explanatory diagram illustrating the data configuration of a picture content file according to the embodiment;
Fig. 12B is an explanatory diagram illustrating the data configuration of a picture content file according to the embodiment;
Fig. 12C is an explanatory diagram illustrating the data configuration of a picture content file according to the embodiment;
Fig. 12D is an explanatory diagram illustrating the data configuration of a picture content file according to the embodiment;
Fig. 12E is an explanatory diagram illustrating the data configuration of a picture content file according to the embodiment;
Fig. 12F is an explanatory diagram illustrating the data configuration of a picture content file according to the embodiment;
Fig. 13 is an explanatory diagram illustrating the schematics of group registration for a copyright administration system according to the embodiment;
Fig. 14 is an explanatory diagram illustrating a technique for managing content usage with the copyright administration system according to the embodiment;
Fig. 15 is a flowchart illustrating a download resuming method with the copyright administration system according to the embodiment; and
Fig. 16 is an explanatory diagram illustrating a specific example of an error display in the event of not authorizing content usage with the copyright administration system according to the embodiment.

### DESCRIPTION OF THE PREFERRED EMBODIMENTS

A preferred embodiment of the present invention will be described in detail with reference to the attached diagrams. Note that with the present specification and diagrams, components having substantially equivalent configuration are denoted with the same reference numerals, so as to avoid redundant description.

### First Embodiment

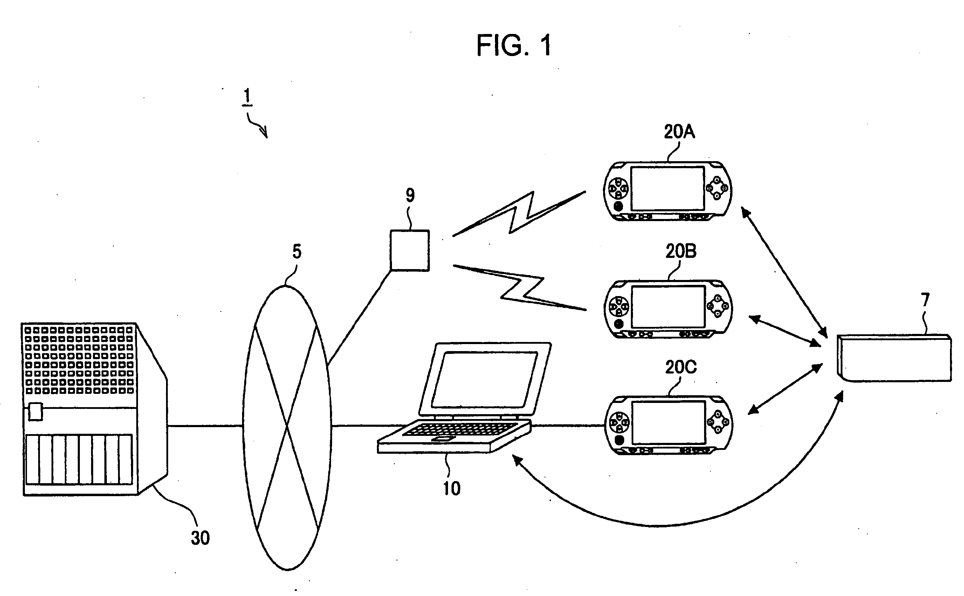

First, an overview of a content distribution system 1 according to an example embodiment of the present invention will be described with reference to Fig. 1. Fig. 1 is an explanatory diagram illustrating the configuration of the content distribution system 1 according to the present embodiment.

As shown in Fig. 1, the content distribution system 1 is made up of an information processing device 10 serving as a user terminal device and portable information processing devices 20A, 20B, 20C (hereafter may also be collectively referred to as "portable information processing device 20"), a content distribution server 30, network 5, and access point 9.

The network 5 is a communication network connecting the information processing device 10, portable information processing device 20, and content distribution server 30 so as to be capable of bi-directional communication. This network 5 is made up of, for example, public networks such as the Internet, a telephone network, satellite communication networks or the like, or a specific-use network such as a WAN (Wide Are Network), LAN (Local Area Network), IP-VPN (Internet Protocol-Virtual Private Network), wireless LAN, or the like, either via cable or wirelessly. The information processing device 10 or the portable information processing device 20 can be directly connected to the network 5 via a wireless LAN, by using the access point 9 as a relay device. This access point 9 can be disposed in various locations such as within a user household, a train station, store, or outdoors.

The content may be various types of content data, such as picture (Video) content made up of moving images or still images such as charts or the like, movies, television programs, or video programs, audio content such as music, lectures, radio programs or the like, game content, document content, software, or the like, for example. Picture content is not limited to picture data, and may include audio data. In the description below, Picture content of a television program (for example, MP4 (Moving Picture Experts Group phase 4) data) or music content (for example, MP3 (MPEG Audio layer-3) content) are primarily given as examples, but the content according to the present invention is not limited to these examples.

The information processing device 10 is a recording/playback device capable of recording and playing back content. Specifically, the information processing device 10 is configured with a computer device (may be notebook type or desktop type) such as a personal computer (hereafter referred to as "PC") as shown in the diagram, but is not limited to this example, and if the device has a communication function via the network 5, the information processing device 10 may be configured with an information household appliance such as a PDA (Personal Digital Assistant), household gaming device, or a DVD/HDD recorder or the like, for example. This information processing device 10 can detachably mount the removable storage medium 7 thereupon.

The portable information processing device 20 is a portable device (hereafter referred to as "PD") which the user can carry around, and is configured with a comparatively small recording/playing device capable of recording and playing back content. More specifically, the portable information processing device 20 is configured with, for example, a portable game device as shown in the diagram, but is not limited to this, and can be a portable telephone, portable movie/audio player, PDA, PHS or the like. The portable information processing device 20 can detachably mount the removable storage medium 7 thereupon.

The removable storage media (Removable Media) 7 is a storage media detachable from the information processing device 10 or portable information processing device 20, and may also be called a removable media or portable media. This removable storage medium 7 is configured with a semi-conductor memory such as a flash memory as shown in the diagram, for example, but is not limited to this example, and may be any random-access capable storage media such as a non-volatile semi-conductor memory such as an EEPROM (Electrically Erasable Programmable Read-Only Memory), and EPROM (Erasable Programmable Read-Only Memory), an optical disk such as a CD-R (Compact Disk Recordable) / RW (Rewritable), DVD-R (Digital Versatile disk Recordable) / RW / + R / + RW / RAM, BD (Blu-Ray Disc (registered trademark)) - R / BD - RE, a magneto-optical disk such as an MO (Magneto Optical) disk, an FeRAM, or magnetic memory. Note that the removable storage medium 7 may be, for example, a storage media having a copyright administration function for limiting copying, playback, or the like of content using an encryption key or the like. Also, the storage capacity of the removable storage medium 7 can be a storage capacity in the amount wherein all data of the content to be downloaded can be stored, but for example in order to store picture content of several gigabytes worth of data, storage capacity must be obtained accordingly.

The content distribution server 30 is configured with a computer device having a server function. The content distribution server 30 is a server providing a movie distribution service with a download rental method, or a content distribution service such as electronic music distribution service or the like, and distributes content to the information processing device 10 or portable information processing device 20 via the network 5, according to the transmission request from the information processing device 10 or portable information processing device 20 possessed by the user. At this time, the content distribution server 30 compresses and encodes the content to be distributed with a compression coding method (CODEC) such as MP4, ATRAC3 (Advanced Transform Acoustic Coding), MP3 or the like, enabling distribution to an information processing device 10 or portable information processing device 20, upon encrypting with an encryption method such as DES (Data Encryption Standard). Also, the content distribution server 30 transmits a content key for decoding the content and a license serving as use rights information of content, along with the encrypted content, to the information processing device 10 or portable information processing device 20. Also, the content distribution server 30 performs accounting processing as to the user having purchased the content, according to the above content distribution.

With the content distribution system 1 configured as described above, content can be downloaded from the content distribution server 30 to the information processing device 10 or portable information processing device 20, and recorded on the removable storage medium 7 mounted on the information processing device 10 or portable information processing device 20. For example, the information processing device 10 can directly download the content from the content distribution server 30. Also, the portable information processing device 20 can indirectly download content from the content distribution server 30 via the information processing device 10, or the content can be directly downloaded via the access point 9 and wireless LAN without going via information processing device 10 from the content distribution server 30. The information processing device 10 and the portable information processing device 20 can use (for example, playback, display, copy, and so forth) the downloaded content within the range of fulfilling the use conditions of the license.

Also, the downloaded content is recorded on the removable storage medium 7, so the downloaded content can be shared between multiple devices by attaching and detaching the removable storage medium 7. For example, by downloading content with a certain portable information processing device 20A and recording this on the removable storage medium 7, and mounting the removable storage medium 7 onto another portable information processing device 20B or the information processing device 10, the content recorded on the removable storage medium 7 can also be read and played back and so forth with other devices.

At the time of the downloading, depending on the type of content, the communication speed of the network 5, the processing speed of the device and so forth, downloading may require a long time. For example, in the case of downloading movie content of high quality for a long period of time, there may be cases of taking 30 minutes to download 60 minutes worth of movie content. Therefore, there may be cases where the user desires to interrupt the download purposefully during the process of the content download. Also, there may be cases of the download being forcibly interrupted by the communication via the network 5 being disconnected, the power of the portable information processing device 20 being turned off, or the removable storage medium 7 becoming detached from the portable information processing device 20.

In the event of downloading being interrupted thus, traditionally only the application performing the download to the device wherein the download is interrupted could resume the download, so the various above-described problems occurred. However, the content downloaded and recorded on the removable medium 7 is moved between devices as described above, by the removable storage medium 7 being attached to and detached from the various devices, so a solution has been sought wherein the download can be resumed with another application or another device other than the downloaded device.

Therefore, with the present embodiment, in the event of downloading and recording the content file on the removable storage medium 7 (hereafter called "content file") in order to perform content download interruption and resuming between multiple devices with a good compatibility, the content file itself during downloading is re-written in preparation of interruption and resuming of the download. In other words, with the present embodiment, a content file including the content data which has been downloaded during the download is created, and the following data is written in the content file so that even in the event of the download being interrupted, the download can be resumed with this content file as the origin thereof.

Specifically, writing the resuming information necessary for resuming the content download in the content file during the download enables resuming the download with the content file as the origin thereof. Thus, the various devices of the portable information processing device 20 and so forth can re-access the download source content and resume the download, based on the address information added to the content file wherein the download is interrupted.

Further, with the present embodiment, a portion of the content file during downloading (for example the leading portion or a mid-section) is re-written, and interruption identification information in a format differing from the content file of a completed download is added thereto. Thus, each of the information processing device 10 and portable information processing device 20 can recognize whether or not the content file is the content file during download, based on whether or not interruption identification information is added thereto.

Also, other than that described above, with the present embodiment, by writing various types of information serving as the resuming information (for example, the amount of data already received, and so forth) into the content file of the interrupted download, the download data amount after resuming the download can be lessened, thereby attempting increased efficiency in downloading again. Further, in order to enable use of the content of the interrupted download at the point in time before download completion (for example, playback of part of the music or picture data, or display a portion of a document or image data), the sequence of downloading various data within the content file is arranged and added information indicating the download progress status is described in the content file.

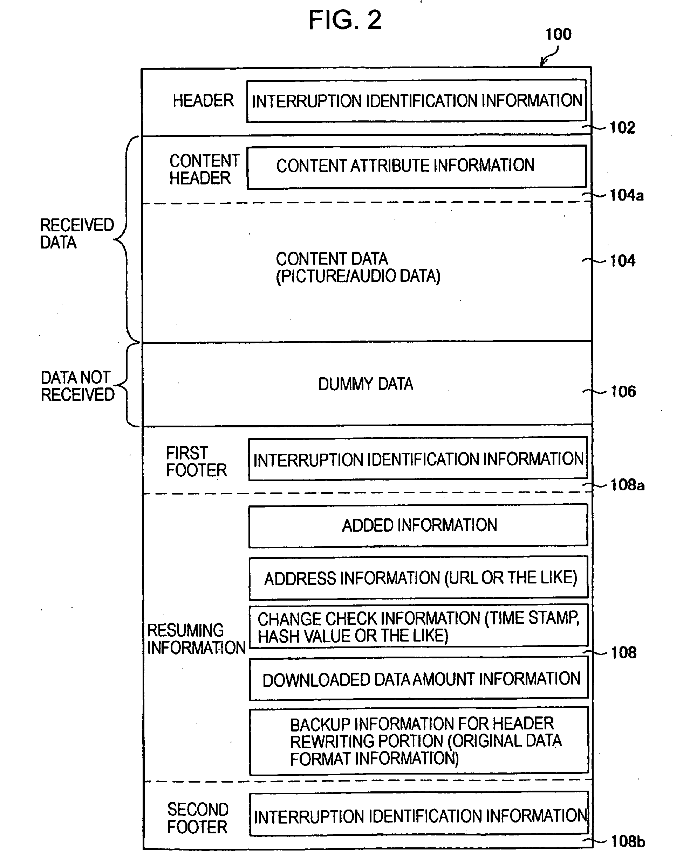

Now, the configuration of a file wherein the content is of an interrupted download (hereafter called "interrupted content") from the content distribution server 30 will be described with reference to Fig. 2. Fig. 2 is an explanatory diagram illustrating the data configuration of an interrupted content file according to the present embodiment.

As shown in Fig. 2, the interrupted content file 100 includes, for example, a header 102 at the leading edge of the file, content data 104 already received, dummy data 106 in the amount of unreceived data of the content data, and resuming information 108 necessary for resuming the download of the interrupted content.

The header 102 is a header for the entire content file (file header), and originally has data formatting information indicating the data format of the content file. This data formatting information includes data identifiers such as data size of the content file, the data type of the content file (MP4 file, JPG MP3 file or the like), and so forth. The header 102 of the content file of a completed download has legitimate data formatting information written therein, similar to a general data file. Conversely, in the case of the interrupted content file 100 as in Fig. 2, the legitimate data formatting information described in the header 102 is re-written in the interruption identification information.

The interruption identification information is interruption identification information indicating that content download has not completed, and for example, may be 16 byte binary data such as "FF FF FF 6F-66 72 65 65-6E 74 65 72-BE AF 36 13". This interruption identification information have not only the legitimate data formatting information of a downloaded content file (for example MP4 file) (i.e., the original data formatting information originally added to the content file), but also legitimate data formatting information for other various data files (JPEG file, ATRAC3 file, MP3 file, PowerPoint file, or the like), set to different values.

Thus, by re-writing the legitimate data formatting information of the header 102 into an interruption identification information with a format different from any of the data formats in existing files, the interrupted content file 100 can be indicated as the file not having completed the download. Accordingly, the information processing device 10 and the portable information processing device 20 can recognize that the download of the interrupted content file 100 is not completed, by referencing the interruption identification information of the header 102 when the interrupted content file 100 is read.

Note that interruption identifier can be more efficiently detected when reading the file from the leading edge if the interruption identification information is added in a region close to the file leading edge such as the header 102 of the file leading edge as shown in Fig. 2, thus this situation is preferable but not limited to this example. For example, arbitrary portions of data such as the center portion or the footer which is the trailing end portion of the interrupted content file 100 can be re-written and the interruption identifier may be added thereto, or if the association with the interrupted content is being made, the interruption identification information may be recorded on the removable storage medium 7 as a separate file from the interrupted content file 100. Also, rather than re-writing the existing data of the interrupted content file 100 into interruption identification information, an arrangement may be made wherein the interruption identification information is added to the file as a separate addition, in which case the interruption identification information may be included in the resuming information.

Also, after the header 102, a content header 104a and a downloaded (received) content data 104 are included. The content header 104a for example is an MP4 header or MP3 header or the like, provided according to the data file type, wherein the content attribute information expressing the attributes of the content data is described. This content attribute information may be content title, artist name, codec information, data size, data playback table, or the like for example. Also, the content data 104 is picture data, audio data, text data, or the like showing the content thereof. Note that a content footer or the like may be provided after the content data 104, and all or a portion of the content attribute information may be described in such content footer or the like.

After the content data 104, dummy data 106 (zero data or the like) which has no meaning as data is described. This dummy data 106 has the amount of data equivalent to the unreceived amount of content data generated by the download interruption. By writing in this dummy data 106, the reservation region for storing the unreceived amount of content data can be secured in the removable storage medium 7, and when the download resumes, all of the content data can be stored securely. Note that resuming information 108 may be provided immediately following the content data 104 region, without providing the dummy data 106.

Further, the resuming information 108 will be described with reference to Fig. 2. A first footer 108a functioning as a header for the resuming information 108 and a second footer 108b functioning as a footer for the resuming information 108 are included before and after the resuming information 108. The above-described interruption identification information is written into the first footer 108a and the second footer 108b.

The resuming information 108 is information necessary for resuming a download of content with an interrupted download. This resuming information 108 includes, as shown in Fig. 2 for example, added information, address information, downloaded data amount information (received data amount information), change check information, and backup information for the re-writing portion of the header 102.

First, the added information will be described. The added information is information used for the use of interrupted content during a download. Specifically, the added information is information (for example, a flag) for distinguishing between the download complete portion and the download incomplete portion, in the case that a portion of the content file such as a mid-portion or the latter half is downloaded.

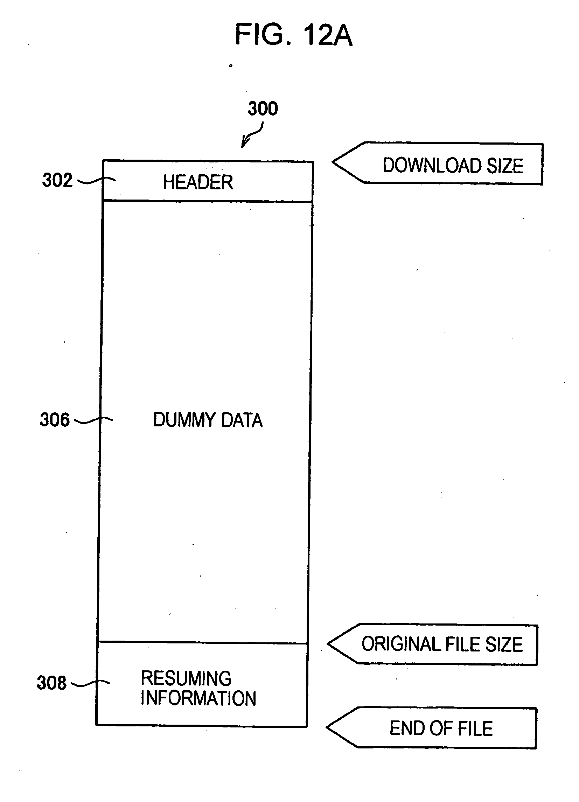

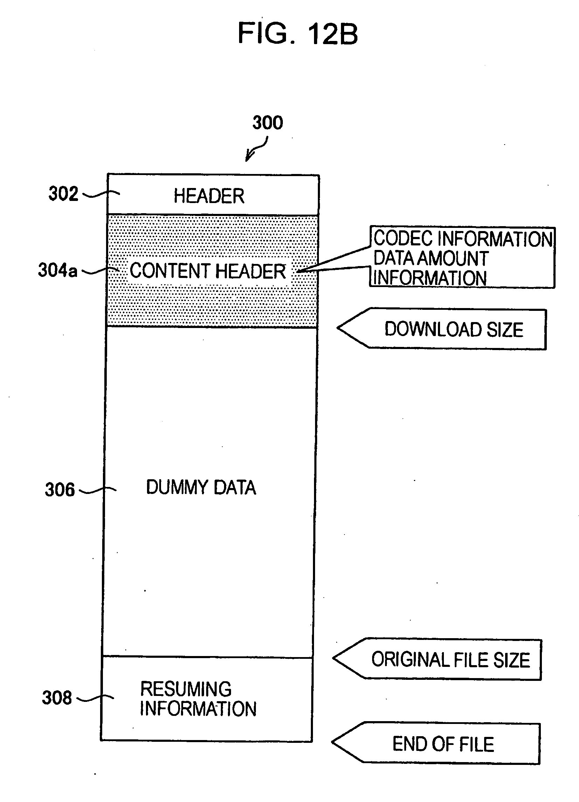

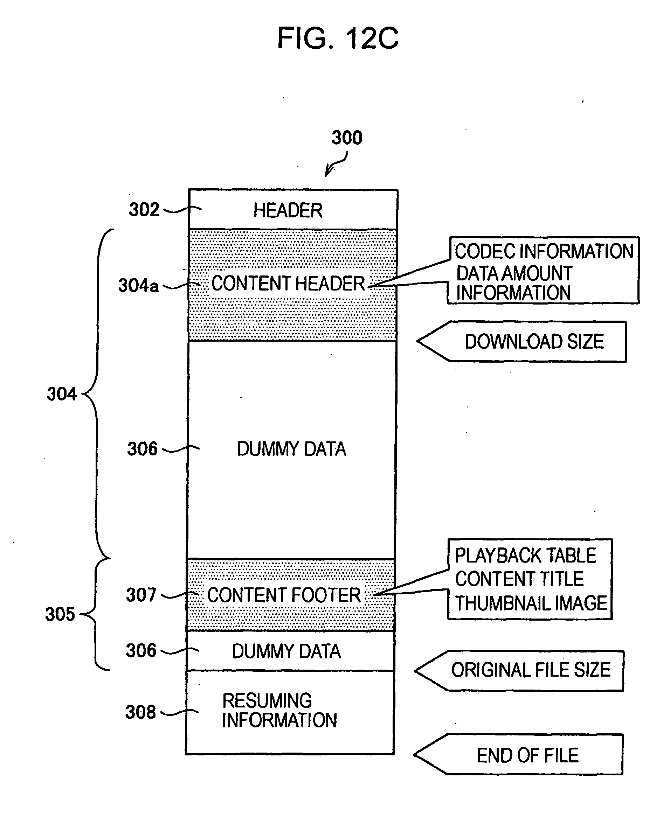

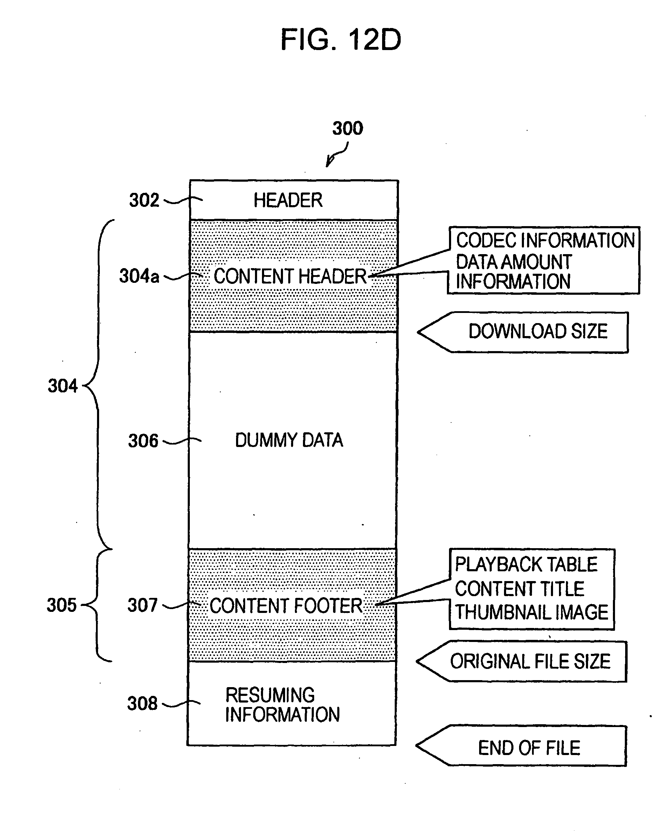

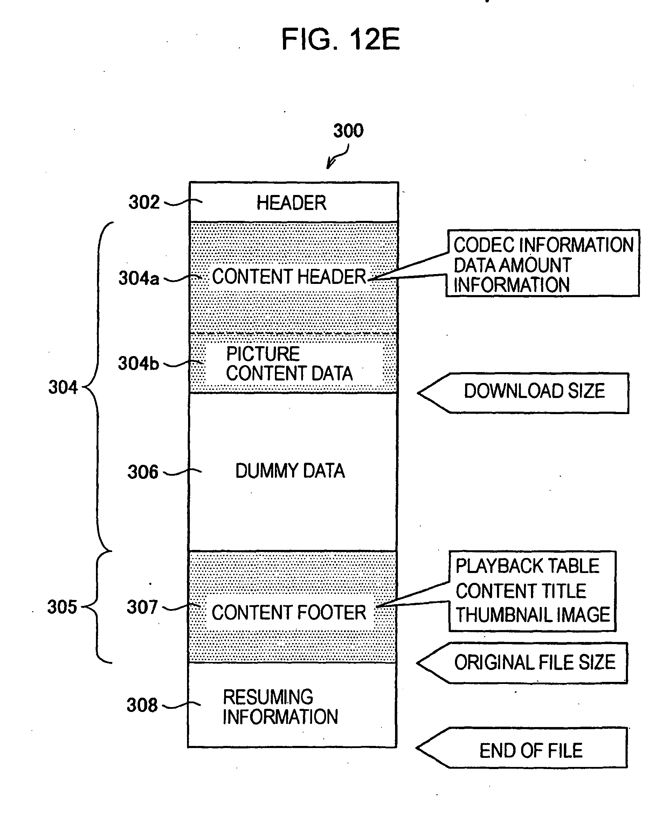

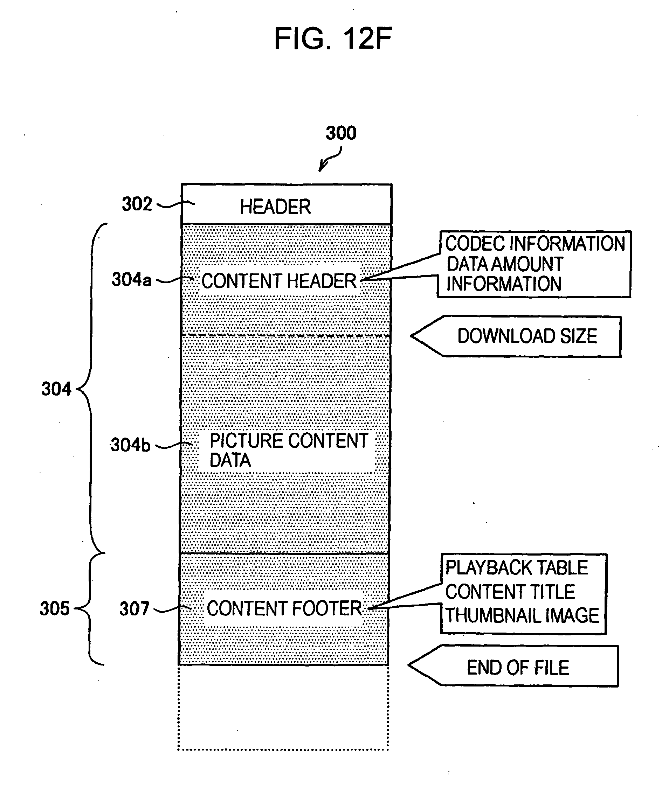

For example, with MP4 content, there may be situations where the content attribute information necessary for playing back the content (content title, thumbnail image, playback table, and so forth) is included in the center portion or latter half of the content file, but in this case, downloading the content attribute information portion first which is in the mid-section or latter half, rather than downloading the content file in sequence from the leading edge, is desirable. Thus, in the event of downloading a portion of the content file such as the mid-section or latter half first, in order to secure the data area (reservation area) for writing in the unreceived content data download, a flag serving as information for distinguishing between the download complete portion and the download incomplete portion (i.e. the added information) is described, indicating that the content attribute information has all been received. For example, in the event that a footer is at the latter half of the MP4 content file wherein a portion or all of the content attribute information is described (see Fig. 12), this flag may be a "1" when the download of this footer portion is completed and a "0" when the download is not completed.

By writing in the added information such as a flag in the interruption content file 100, the portable information processing device 20 can determine whether or not the MP4 file of an interrupted download can be played or not, based on the added information.

Next, the address information will be described. The address information is information showing a method for re-downloading the interrupted content from the download source or the like (for example, the location where the content of the download source is stored, and the communication protocol for accessing such location).

The address information is a URL (Uniform Resource Locator) of the content of the download source stored in the content distribution server 30, or a file path (including a file ID) on a network of the content of the download source. A URL (http://...) includes information showing the storage location of the content of the download source, and the information showing communication protocol for accessing such location. Accordingly, the various device such as the portable information processing device 20 can re-access the storage location of the content of the download source indicated by the URL using the communication protocol indicated by the URL, and resume the interruption content download. Also, in the event that a file path on a network serving as address information is written in the interrupted content file 100, the various devices of the portable information processing device 20 or the like can re-access the content of the download source and resume the interrupted content download, according to the file path on the network.

Next, the downloaded data amount information will be described. The downloaded data amount information is information indicating the data amount of content which the device such as the portable information processing device 20 has received from the content distribution server 30, and is information showing the data amount received until the time of interruption in the case that the content download is interrupted. In the example of the interrupted content file 100 in Fig. 2, the downloaded data amount is the sum of the data amount of the content data region 104, i.e., the data mount of the content header 104 in the interrupted content file 100, and the data amount of the received content data.

By writing the downloaded data amount information in the interrupted content file 100 as resuming information, the range of the unreceived data of the interrupted content can be specified. Accordingly, at the time download resuming, the information indicating the range of unreceived data can be transmitted from the portable information processing device 20 to the server and downloading only the unreceived data of the interrupted content is possible, thus the data amount to be downloaded can be decreased and efficiency improved. For example, in the case that a portion of content data (for example, 30% of the whole) of the interrupted content file 100 has been received, at the time of downloading resuming, only the unreceived portion of content data (for example, 70% of the whole) can be downloaded without downloading the received portion, thereby enabling a smaller amount of transfer data after resuming downloading, and the download time can be reduced (for example 30%). Also, in order to further effectively perform such re-downloading processing, change check information or backup information such as described above is desirable to be written in as resuming information.

Next, the change check information will be described. The change check information is information for checking whether or not there is a change to the original content of the download source at the time of download resuming. With the content distribution server 30, there may be cases wherein the original content of the server is updated (replaced). For example, in the event of a problem with the content of the picture content of a news program, there may be cases wherein the picture content is updated, and also, there may be cases wherein the document content stored by the content distribution server 30 is illegitimately re-written. Therefore, at the time of download resuming of the interrupted content, determination is made as to whether or not the original content on the content distribution server 30 side is updated, and if it is updated, all of the content after the update is downloaded, requiring the received data to be replaced. On the other hand, if there are no updates, only the unreceived data needs to be downloaded and added to the data received prior to the interruption.

Thus, in order to check whether or not there are changes to the original content on the content distribution server 30 side, the change check information is written into the interruption content file 100. As for the change check information, for example, a final update time stamp of original content stored in the content distribution server 30, or a value calculated at the content distribution server 30 side of a hash value such as a hash value of the content, may be used. The time stamp is point-in-time information added at the time of updating of the original content on the content distribution server 30 side, and determination can be made as to whether the content file has been updated depending on whether or not the time stamps are identical. Also, if the content file changes on the content distribution server 30 side, the hash value also changes so determination can be made as to whether the content file has been updated depending on whether or not the hash values are identical.

By writing the change check information such as time stamp or hash values or the like in the interrupted content file 100 at the time of download interruption, the change check information can be checked at the time of download resuming and the necessary portion of content data can be re-downloaded.

Next, the backup information for the re-writing portion of the header 102 will be described. As described above, in order to show that the download has not been completed, legitimate data format information added to the header 102 of the interrupted content file 100 is re-written into interruption identification information until the download is completed. The legitimate data formatting information prior to the re-writing is written and backed up in to the interruption content file 100 as resuming information. Thus, at the time of download completion, in the event of writing back to the legitimate data formatting information originally adding the interruption identification information of the header 102, the backup information is read and used, thus not requiring downloading again of the already-downloaded legitimate data formatting information, thereby enabling a smaller amount of data downloading after download resuming, and efficiency can be improved.

The data configuration of the interrupted content file 100 according to the present embodiment has been described above with reference to Fig. 2. By arranging the interrupted content file 100 as the above-mentioned configuration, the interrupted content of which the download is interrupted with a certain device can have the download resumed with another device. For example, the removable storage medium 7, on which the interrupted content is recorded of which the download has been interrupted with the portable information processing device 20A in Fig. 1, is mounted on another portable information processing device 20B, whereby the download of the interrupted content can be resumed with the portable information processing device 20B and the download can be completed.

Also, even within the same device, interruption and resuming of a download with different applications can each be performed. For example, the interrupted content downloaded with the downloading application of the portable information processing device 20A can have the download thereof resumed with another content resuming application, and the download completed. Further, with the various portable information processing devices 20, the received data of the interrupted content can be played back, or the received data of the interrupted content can be played back while the interrupted content is being downloaded again.

As described above, the interrupted content file 100 is in a format such that the received content data and the added data such as the resuming information or the interruption identification information can be distinguished from one another. Thus, the portable information processing device 20 can play back the interrupted content file.

Also, adding to/changing the interrupted content file 100 can be performed before completion of the download. In this case, it is desirable, until the download is completed, for the interruption content file 100 to retain the original data prior to the changes/adds, and perform the changes/adds to the data after completion of the download. Therefore, the interruption content file 100 is specified to be a data format capable of storing the add/change content data for the interrupted content file 100, and is arranged to reflect the stored add/change data after completion of the download.

The configuration and operation of the portable information processing device 20 in order to realize download interruption and resuming using the interruption content file 100 as described above will be described. The configuration of the portable information processing device 20 will be described in detail below; however, there may be similar configurations with the information processing device 10, so the details thereof will be omitted.

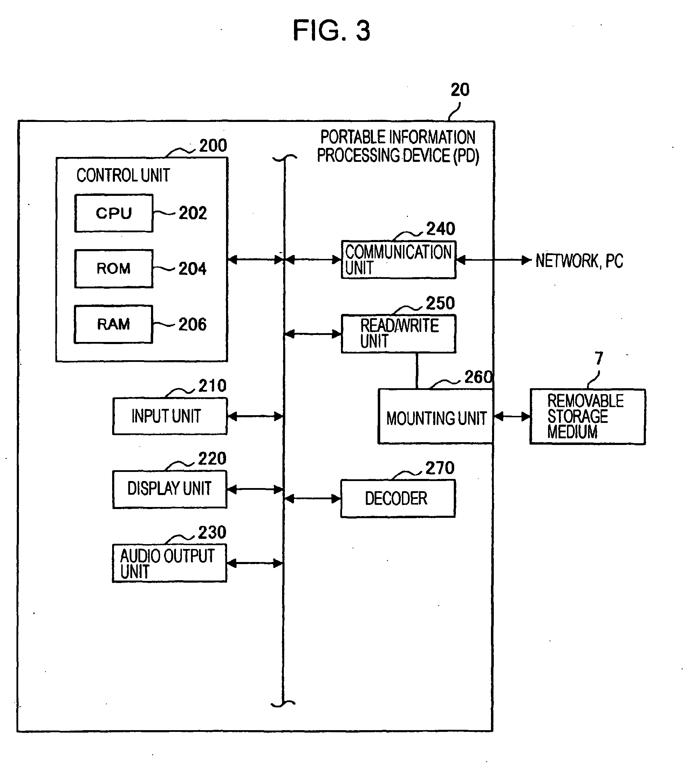

Next, the configuration of the portable information processing device 20 according to the present embodiment will be described with reference to Fig. 3. Fig. 3 is a block diagram showing the configuration of the portable information processing device 20 according to the present embodiment.

As shown in Fig. 3, the portable information processing device 20 has a control unit 200, an input unit 210, a display unit 220, an audio output unit 230, a communication unit 240, a read/write unit 250, a mounting unit 260, and a decoder 270.

The control unit 200 is made up of a central computing processing device (CPU: Central Processing Unit) 202, a ROM (Read Only Memory) 204 configured with a flash memory or the like, and RAM 206 configured with SRAM (Static Random Access Memory) or the like, for example. The CPU 202 operates according to the program stored in the storage medium such as ROM 204 or RAM 206, and controls the overall operation of the portable information processing device 20.

The input unit 210 is made up of operational units, for example, such as a touch panel, buttons, switches, levers, mouse, keyboard, or the like, and an input control circuit to generate an input signal and output to the control unit 200. The user of the portable information processing device 20 can input various types of data as to the portable information processing device 20, and instruct the processing operation by operating the input unit 210.

The display unit 220 is configured with a liquid crystal display device (LCD) or the like, and the various types of information such as played back content is displayed with text or images. The audio output unit 230 is made up of an audio output circuit, speaker, headset, earphones, or the like, and outputs audio of various type of information such as played back content.

The communication unit 240 is a device to perform data communication between external devices. This communication unit 240 transmits/receives various types of information such as content or content transmission requests or the like between the content distribution server 30, information processing device 10, and other portable information processing devices 20, via the network 5 or wired cable (not shown).

The read/write unit 250 is made up of a reader/writer device which reads and writes data on the removable storage medium 7, and a drive and so forth. The read/write unit 250 writes and records various types of data supplied from the control unit 200 or the communication unit 240 on the removable storage medium 7 mounted on the mounting unit 260. Also, the read/write unit 250 reads various types of data such as content from the removable storage medium 7 mounted on the mounting unit 260 and outputs this to the control unit 200, display unit 220, audio output unit 230 or decoder 270 and so forth. Also, the mounting unit 260 is a device for mounting the removable storage medium 7, and is a slot for semi-conductor memory or a mount portion for an optical disk, for example.

The decoder 270 decompresses the compressed data of the content read from the removable storage medium 7, and converts this to non-compressed data (for example, linear PCM data). Also, the non-compressed data is converted from digital data to analog data by an unshown D/A converter, supplied to the display unit 220 or audio output unit 230, and is output as picture or audio. Note that the decoder 270 or D/A converter may be configured with hardware as described above, but can also be configured with software.

Note that the portable information processing device 20 according to the present embodiment does not have a storage unit such as a hard disk drive (HDD) for example, and the large data such as picture content or the like is recorded only on the removable storage medium 7. However, this is not limited to the examples given, and large-capacity storage such as an HDD or the like can also be provided on the portable information processing device 20.

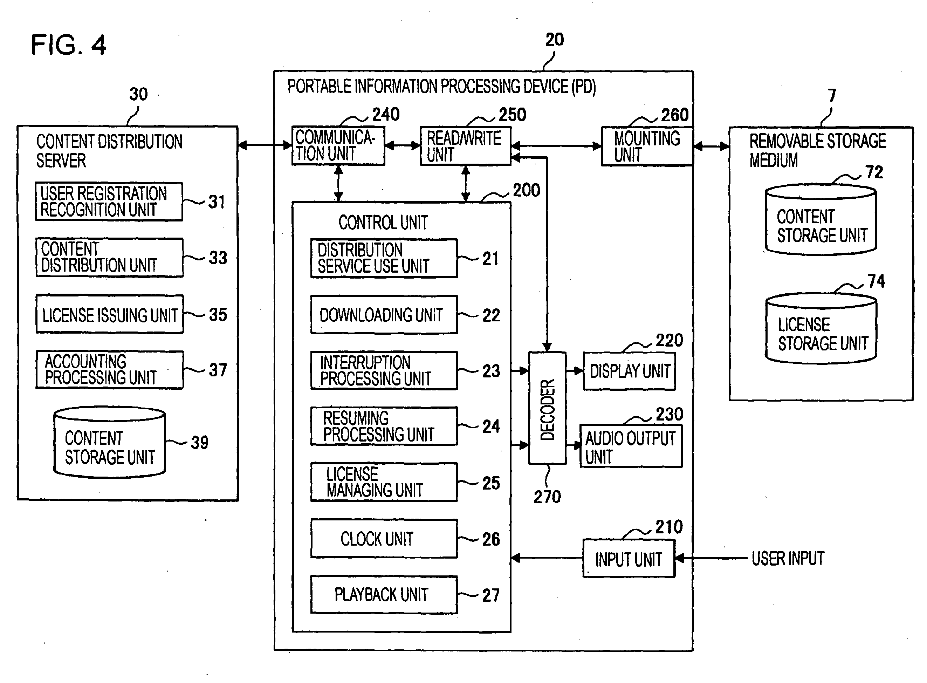

Next, the functional configuration of the portable information processing device 20 and content distribution server 30 according to the present embodiment will be described with reference to Fig. 4. Fig. 4 is a block diagram showing the functional configuration of the portable information processing device 20 and content distribution server 30 according to the present embodiment.

As shown in Fig. 4, the content distribution server 30 has a user registration recognition unit 31 arranged to perform registration and recognition processing of the user using the content distribution service, a content distribution unit 33 arranged to transmit the received content of the transmission request to the portable information processing device 20 and so forth, a license issuing unit 35 arranged to issue a license corresponding to the transmitted content and transmit to the portable information processing device 20 and so forth, an accounting processing unit 37 arranged to perform accounting processing according to the license content of the transmitted content, and a content storage unit 39 arranged to store multiple contents to be distributed.

Also, the removable storage medium 7 has a content storage unit 72 arranged to store one, or two or more, contents downloaded from the content distribution server 30, and a license storage unit 74 arranged to store the license corresponding to the various contents, provided thereto.

Also, the portable information processing device 20 has, in addition to the various units described with Fig. 3, a distribution service use unit 21, downloading unit 22, interruption processing unit 23, resuming processing unit 24, license managing unit 25, clock unit 26, and playback unit 27 within the control unit 200. These units can be realized by the CPU 202 executing a program corresponding to the various above-mentioned units, for example. Note that the various units within the control unit 200 can read various types of data from the removable storage medium 7 or write and record various types of data on the removable storage medium 7 by controlling the read/write unit 250, and also can transmit/receive various types of data between external devices of the content distribution server 30 and so forth, by controlling the communication unit 240, but in the following description, the main operating unit of these operations are described are the various units of the control unit 200, for convenience of description.

The distribution service use unit 21 performs processing for using the content distribution service provided by the content distribution server 30. Specifically, the distribution service use unit 21 performs processing such as registration and recognition processing of the user with the content distribution server 30, reception of content list to be distributed and display control processing, processing to transmit a transmission request of the content selected based on user input and so forth, selection of use conditions of the content to be purchased and the transmission processing thereof, and display processing of various information associated with content distribution, and so forth.

The downloading unit 22 downloads content from the content distribution server 30. Specifically, the download unit 22 receives content transmitted from the content distribution server 30 via the network 5, during which the received content is sequentially recorded on the removable storage medium 7.

At this time, the download unit 22 can sequentially receive the content to be downloaded from the content distribution server 30 and record this on the removable storage medium 7. Alternatively, the download unit 22 can first receive the content attribute information necessary for use with content to be downloaded, and record this on the removable storage medium 7, following which can receive the content and record this on the removable storage medium 7. Thus, the content attribute information necessary for playing back the content can be completely downloaded before the content data, enabling the received data of the interrupted content to be played back by the later-described playback unit 27 using the content attribute information, even in the case of the content download being interrupted.

The interruption processing unit 23 performs interruption processing of content downloading by the downloading unit 22. The interruption processing unit 23 correlates the resuming information necessary for resuming a content download and records this on the removable storage medium 7. With the present embodiment, as shown in Fig. 2, the content and the resuming information is correlated by adding the resuming information in a content file during download which is recorded on the removable storage medium 7.

The resuming information which the interruption processing unit 23 adds to the content, as shown in Fig. 2, includes address information from the download source of the content during downloading, change check information (for example, a final updated time stamp of the original content stored in the content distribution server 30, or hash values of the content), downloaded data amount information of the content, backup information of legitimate data format information re-written into interruption identification information, interruption identification information, and so forth. Note that the interruption processing unit 23 may record a portion or all of the resuming information on the removable storage medium 7 as a separate file differing from the content file.

Also, the interruption processing unit 23 records the interruption identification information showing that the reception of content from the downloading unit 22 has been interrupted on the removable storage medium 7. This interruption identification information is identification information showing that the content download has not been completed. With the present embodiment, as shown in Fig. 2, the interruption processing unit 23 re-writes the data formatting information in the leading header 102 of the content file stored in the removable storage medium 7 into interruption identification information differing from legitimate data formatting, thereby adding interruption identification information to the content. Further, the interruption processing unit 23 writes backup information for the legitimate data formatting information before the re-writing in the content file as resuming information.

The interruption processing unit 23 thus configured can add resuming information and interruption identifiers as to the interruption content file 100 when the download of the content from the downloading unit 22 is detected as having been interrupted, for example. Thus, adding only the resuming information and interruption identifiers as to the interruption content, without adding this information as to the content for the download to be completed normally, suffices, enabling efficient interruption processing. Also, the interruption processing unit 23 adds the resuming information and interruption identifiers as to the content file during receiving thereof, prior to the download being interrupted during the content download, and the received data amount may be updated each time a predetermined amount of data is received. Thus, even in the event that the power of the portable information processing device 20 is turned off during the download, or in the event that the removable storage medium 7 is removed from the portable information processing device 20 by the user, the resuming information and interruption identifiers can be securely added into the interrupted content file.

The resuming processing unit 24 performs resuming processing of content downloading. The resuming processing unit 24 reads the resuming information added in the interruption content file 100 from the removable storage medium 7 when the download resuming instructions of the interruption content stored in the removable storage medium 7 are received from the input unit 210, and transmits a transmission request for interrupted content to the content distribution server 30, based on the resuming information. At this time, the resuming processing unit 24 recognizes a location on the network wherein the original content of the interrupted content exists, and the communication protocol for accessing such location, based on the address information (URL or the like) included in the resuming information. According to the transmission request of the resuming processing unit 24, when the unreceived data of the interrupted content is transmitted from the content providing server 60, the downloading unit 22 of the portable information processing device 20 receives the data and records this on the removable storage medium 7.

Also, upon the resuming processing unit 24 receiving selection instructions for the content file recorded on the removable storage medium 7 from the input unit 210, in the event that the data formatting information added to the header 102 in the content file is interruption identification information, the content is determined to be interrupted content, and a transmission request for the interrupted content is transmitted to the content distribution server 30. On the other hand, in the event that the data formatting information is normal data which is not interruption identification information, the resuming processing unit 24 determines that the content is normal content having completed the download. Thus, the resuming processing unit 24 can determine whether or not the content stored in the removable storage medium 7 is interrupted content.

Further, in the event that the resuming processing unit 24 completes the download of interrupted content with the downloading unit 22, the interruption identification information written in the header 102 of the interrupted content file is written back To the normal data formatting information added beforehand. At this time, the resuming processing unit 24 reads the backup information for the above-mentioned normal data formatting information included in the resuming information, and overwrites into interruption identification information, thereby lessening the data amount to be downloaded since there is no need to re-download the normal data formatting information from the content distribution server 30.

Also, in the event of resuming the download of the interrupted content, the resuming processing unit 24 reads the above-mentioned downloaded data amount information from within the interrupted content file 100 stored in the removable storage medium 7, and transmits the data amount information, or unreceived data range information generated based on the data amount information, to the content distribution server 30. This unreceived data range information is information showing the range of content data unable to be received by the earlier download interruption. For example, if the entire data amount of the content is 10 mega-bytes and the downloaded data amount information is 3 mega-bytes, the unreceived data range information becomes information showing the data range after the 3 mega-bytes from the reading edge of the content. Thus, the downloading unit 22 only needs to download only the unreceived data from the interrupted content by the resuming processing unit 24 transmitting the generated unreceived data range information or the downloaded data amount information to the content distribution server 30, enabling the transferred data amount to be reduced and the downloading efficiency to be improved.

Also, in the event of resuming the interrupted content download, the resuming processing unit 24 reads the change check information (time stamp, hash values, or the like added to the content) from the interrupted content file 100 stored in the removable storage medium 7, and transmits this to the content distribution server 30. Thus, the content distribution server 30 compares the change check information received from the portable information processing device 20 and the new change check information added to the original content of the interrupted content to be downloaded, and as a result of this comparison, if the two are identical, only the unreceived data of the interrupted content is transmitted to the portable information processing device 20, and if the two are not identical, all of the data of the interrupted content is transmitted.

Also, such comparison of change check information can be performed by the resuming processing unit 24 of the portable information processing device 20. In this case, an arrangement may be made wherein the resuming processing unit 24 receives the new change check information added to the original content of the interrupted content to be downloaded from the content distribution server 30 when resuming the download, compares the change check information of the interrupted content read from the removable storage medium 7 and the new change check information, and if the two are identical, a transmission request for unreceived data of the interrupted content is transmitted to the content distribution server 30, and if the two are not identical, a transmission request for all of the data of the interrupted content is transmitted to the content distribution server 30.

By the change check information thus being compared, confirmation can be made as to whether the original content being stored in the content distribution server 30 is updated at the time of download resuming of the interrupted content. As a result, in the event that an update is made, all of the data after renewal is downloaded and the interrupted content on the removable storage medium 7 is over-written, and on the other hand in the event an update is not made, only the unreceived data may be downloaded, and added to the content stored in the removable storage medium 7. Therefore, the content stored in the removable storage medium 7 can be updated to the new content at the time of re-downloading.

Also, in the event that the interrupted content download by the downloading unit 22 is completed, the resuming processing unit 24 deletes the resuming information added to the interrupted content file 100 stored on the removable storage medium 7. If the download is completed, there may be problems wherein the resuming information added to the content file becoming a reason for a file formatting error, therefore the resuming information is deleted.

Further, in the event that a validity period is set on the interrupted content, the resuming processing unit 24 may be arranged to permit the download resuming if within the validity period. Specifically, upon the resuming processing unit 24 receiving the download resuming request for interrupted content from the input unit 210, the resuming processing unit 24 reads the validity period information in the license corresponding to the interrupted content stored in the license storage unit 74 of the removable storage medium 7, and compares the current point-in-time measured by the clock unit 26 and the validity period information. As a result, if the current point-in-time is within the validity period, the resuming processing unit 24 transmits a transmission request for the interrupted content to the content distribution server 30, and re-downloads the interrupted content. On the other hand, in the event that the current point-in-time has surpassed the validity time period, the resuming processing unit 24 prohibits download resuming of the interrupted content. Note that this is not limited to the example herein, and an arrangement may be made wherein, for example, even if the interrupted content is past the validity period, download resuming of the interrupted content is permitted but the playback of the interrupted content is prohibited.

The license managing unit 25 controls the content use (playback, display, copy) based on the license corresponding to the content. Specifically, upon the license managing unit 25 receiving content use instructions from the input unit 210, the license corresponding to the content stored in the license storage unit 74 of the removable storage medium 7 is read, and the use of the content is permitted/prohibited based on the use conditions in the license. The use conditions of the license may include limitations based on a validity period, limitations for number of uses (number of times to play back, number of times to copy, number of movements between devices), and so forth.

The playback unit 27 controls a decoder 270 or D/A converter (not shown) or the like to play back the content stored on the content storage unit 72 of the removable storage medium 7. Specifically, upon receiving playback instructions of the content from the input unit 210, the playback unit 27 reads the content stored in the content storage unit 72 of the removable storage medium 7, decompresses the compressed data of the content with the decoder 270, further converts the data to analog data with the D/A converter, and makes a display on the display unit 220 or outputs audio from the audio output unit 230. Note that whether or not the playback of the content by the playback unit 27 is permitted/prohibited is controlled by the above-mentioned license managing unit 25.

The playback unit 27 plays back content using the content attribute information in a content file. That is to say, in order to enable the user to select the content, the playback unit 27 reads the content attribute information of the content stored on the removable storage medium 7, and displays a content title or thumbnail image included in the content attribute information on the display unit 220. Also, in the event that the content attribute information includes a playback table describing the relation between the location from the leading edge of the content data and the playback time, the playback unit 27 uses the playback table to perform content playback, fast forward, rewind, skip, and so forth.

Also, the interrupted content file 100 (see Fig. 2) and the content file during download are formatted such that the received content data and the added data such as the resuming information or interruption identification information can be distinguished from one another. Therefore, the playback unit 27 can also play back received data of interrupted content stored on the removable storage medium 7. Further, the playback unit 27 can play back the received data of content during download, during the process of downloading new content or the interrupted content with the downloading unit 22. Also, in the event that the content is document content or the like, the received data portion of the interrupted content can be read and displayed prior to the download completing.

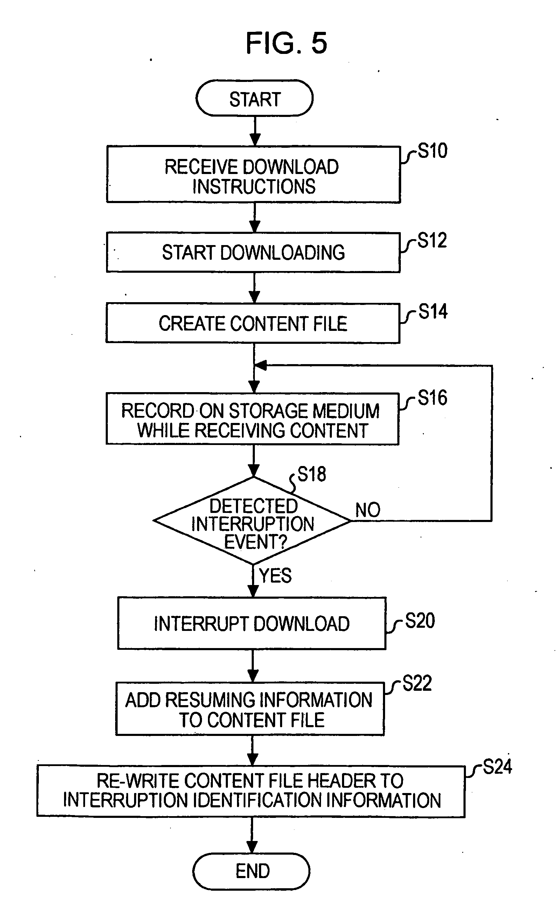

Next, an example of a download interruption method with the portable information processing device 20 will be described with reference to Fig. 5. Fig. 5 is flowchart illustrating an example of a download interruption method according to the present embodiment. This example shows resuming information being added to the interruption content file after the content download is interrupted.

As shown in Fig. 5, upon the download unit 22 of the portable information processing device 20 receiving download instructions of content selected by user input (step S10), a transmission request for the content is transmitted to the content distribution server 30, and the content download is started (step S12). Next, the download unit 22 creates a content file to be downloaded of a free size within the removable storage medium 7 (step S14). At this point in time, the content file is in a state including only the header 102 wherein the data formatting information for the content to be downloaded is written. The content file has downloaded content data written therein which becomes valid data, but the latter half may include dummy data. Also, in the case of downloading picture content, for example the size of the content file to be created will be secured as the file size of the original content from the content distribution server 30.

Next, the download unit 22 writes the received content into the content file within the removable storage medium 7 while receiving the content transmitted from the content distribution server 30 (step S16). Whether or not a content download interruption event has occurred is constantly being monitored during the downloading by the interruption processing unit 23 (step 18), and in the event an interruption event is detected, the flow is advanced to step S20, and the content download is interrupted (step S20). The interruption event detected here is, for example, "download interruption instruction by user" or "communication disconnected through network 5" and so forth. Note that in the event an interruption event is not detected through completion of the content download, the download processing is ended normally.

Upon the download in step S20 being interrupted, the interruption processing unit 23 adds the above-mentioned resuming information to the trailing edge of the content file of which the download is interrupted (interrupted content file 100) (step S22). Resuming information is information necessary for resuming a download, such as address information of the download source of the interrupted content. Thus, the interrupted content and the resuming information thereof are stored within one file of the removable storage medium 7. The data in the resuming information is constantly over-written, and is arranged such that unknown data written by a separate device (other portable information processing device 20 or information processing device 10) previously is not continued.

Further, the interruption processing unit 23 re-writes the legitimate data formatting information written in the leading header 102 of the interrupted content file 100 into interruption identification information not identical to any of the other data files (step S24). With this interruption identification information, the various devices whereupon the removable storage medium 7 is mounted, wherein the interruption content is stored, are arranged to be able to recognize that the interrupted content is incomplete content during a download.

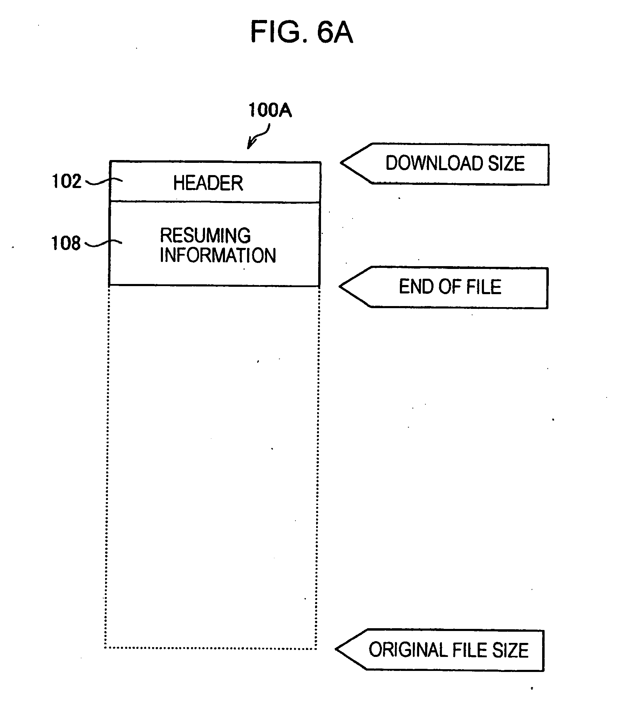

Now, an example of the interrupted content file 100 created as described above will be described. Fig. 6A is an explanatory diagram illustrating the data configuration of the interrupted content file 100A in the case of a download being interrupted immediately prior to the content download being started (step S12). As shown in Fig. 6A, in this case, the content data is not received, so the interrupted content file 100A only includes the file leading edge header 102 and the file trailing edge resuming information 108. Of the resuming information 108, the field for backup information for the re-writing portion of the header 102 is invalid, the downloaded data amount information (download size) is zero, and the change check information is not described; therefore, in the case of restarting a download, all of the content data is re-downloaded. With such an interrupted content file 100A, for example, an arrangement may be made to function similar to an internet shortcut, and can download content whenever, with the interrupted content file 100A as the origin point.

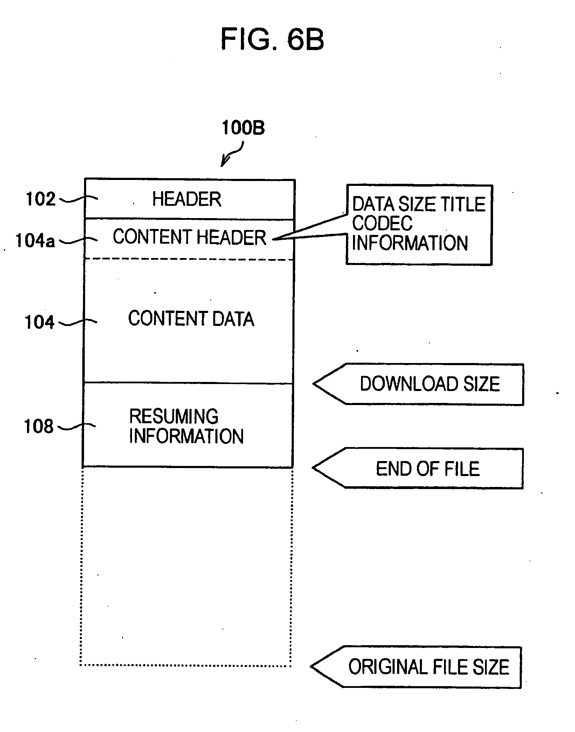

Also, Fig. 6B is an explanatory diagram illustrating the data configuration of an interrupted content file 100B in the event that the download is interrupted during the download of content (step S16).

As shown in Fig. 6B, with the interrupted content file 100B, the download is interrupted during reception of the content data 104; therefore, the resuming information 108 is added immediately following the received content data 104. The downloaded data amount is the data amount of the content header 104a and the content data 104, and the download size corresponds to the leading edge position of the resuming information 108.

Note that such an interrupted content file 100B applies in the case that a download of music content MP3 data is interrupted, and the content header 104a (MP3 header) includes the amount of all data, title, codec information, and the like, for the music content. The music content made up of MP3 data is not provided with a content footer at the trailing edge of the content data 104. Accordingly, in the state of Fig. 6B, all of the content attribute information is completely downloaded, so the playback unit 27 is enabled to play back the received amount of data of the content data using the content attribute information.

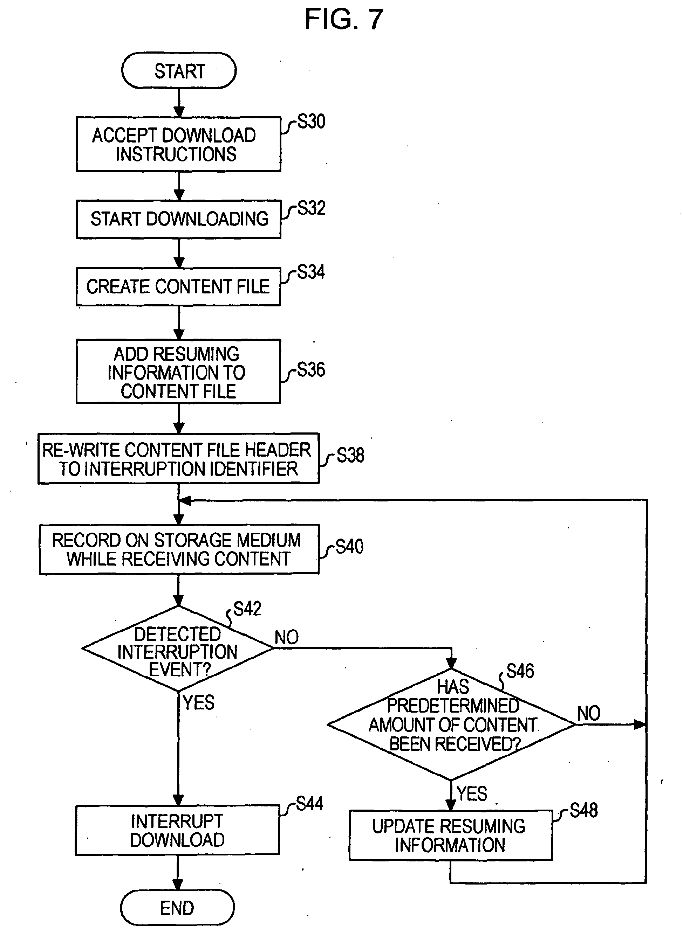

Next, another example of a download interruption method with the portable information processing device 20 will be described with reference to Fig. 7. Fig. 7 is a flowchart showing another example of the download interruption method according to the present embodiment. This example shows an arrangement to add resuming information beforehand to the content file, in preparation for an unexpected interruption during the download of content.

As shown in Fig. 7, first, upon the downloading unit 22 of the portable information processing device 20 receiving downloading instructions for content selected by user input (step S30), a transmission request for the content is transmitted to the content distribution server 30, and the content download is started (step S32). Next, the download unit 22 creates a content file to be downloaded of a free size within the removable storage medium 7 (step S34).

Next, the interruption processing unit 23 adds the above-mentioned resuming information to the trailing end of the above created content file (step S36), for example, before the reception of the content data actually starts, or immediately after starting reception. At this time, a reserved region for a predetermined amount of data (e.g., 1 megabyte) is secured between the header 102 of the content file and the resuming information 108, for writing in the content received at the latter step S40, and dummy data is written in to this reserved region. After this, the interruption processing unit 23 re-writes the legitimate data formatting information described in the leading edge header 102 of the above created content file into interruption identification information not matching any of the other data files (step S38).

After this, the download unit 22 receives the content transmitted from the content distribution server 30, and at the same time records the received content on the content file in the removable storage medium 7 (step S40).

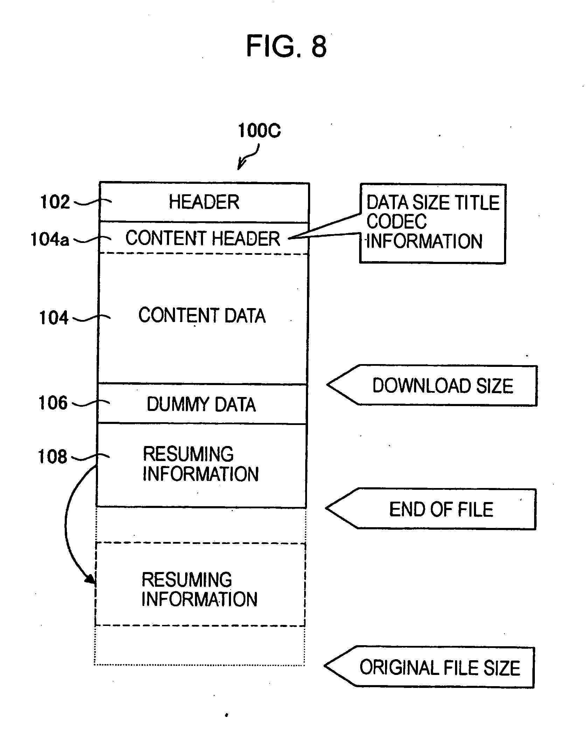

Fig. 8 is an explanatory diagram showing the data configuration of a content file 100C during content downloading. As shown in Fig. 8, after the header 102, the content header 104a received in the downloading processing and the content data 104 is sequentially written into the content file 100C after the header 102, and there is dummy data 106 for securing a reserved region between the trailing end of the content data 104 and the predetermined added resuming information 108. The downloaded content data 104 sequentially overwrites the dummy data 108 of the reserved region. As the download progresses, the downloaded data amount information of the resuming information 108 in the content file 100C is gradually (for example, 1k at a time) updated to a larger value.

Also, during a download as described above, whether or not a content download interruption event has occurred is constantly monitored by the interruption processing unit 23(step S42), in the event that an interruption event is detected, the flow advances to step S44, and the content download is interrupted (step S44). The interruption event detected here includes, for example, "input of downloading interruption instructions by user" or "communication disconnection via network 5" which are detected in the above-described case in Fig. 5, as well as "power turned off of the portable information processing device 20" or "removal of the removable storage medium 7 from the mounting unit 260 of the portable information processing device 20". Note that in the event an interruption event is not detected through completion of the content download, the download processing is ended normally.

Further, during the download, the received data amount of the content is checked by the interruption processing unit 23, detection is made whether or not content of only the predetermined data amount of the above reserved region (for example, 1 mega-byte) is received (step S46), and the resuming information added to the content file during the download is updated each time the predetermined data amount of content is received (step S48).

To describe this process with reference to the above-mentioned Fig. 8, in the event that the content data 104 of only the reserved region amount written into the dummy data 106 is downloaded, the reserved region for the above-mentioned predetermined data amount is newly secured and the dummy data 106 written into the newly secured reserved region, as well as moving the position of the resuming information 108 to the trailing edge of the newly secured reserved region (step S48). After this, further in the event that only the reserved region amount of the content data 106 is received (step S40), the reserved region is secured again, as with the above, and the position of the resuming information 108 is moved to the trailing end of the newly secured reserved region (step S48). By repeating such process, the resuming information 108 maintains a state added to the trailing end side of the content file 100C, and the downloaded content data 108 is gradually written into the content file 100C.

As described above, by writing the resuming information into a content file prior to downloading interruption, in the case that an unexpected download interruption occurs so that the resuming information cannot be written into the removable storage medium 7 after downloading interruption (for example, "portable information processing device 20 is powered off" or "removal of removable storage medium from the mounting unit 260 of the portable information processing device 20"), an arrangement may be made wherein the data configuration can be capable of downloading the interrupted content. Note that an arrangement may be made wherein the interruption processing described in Fig. 5 and the interruption processing described in Fig. 7 are shared so that the two can be used separately according to the cause for download interruption.

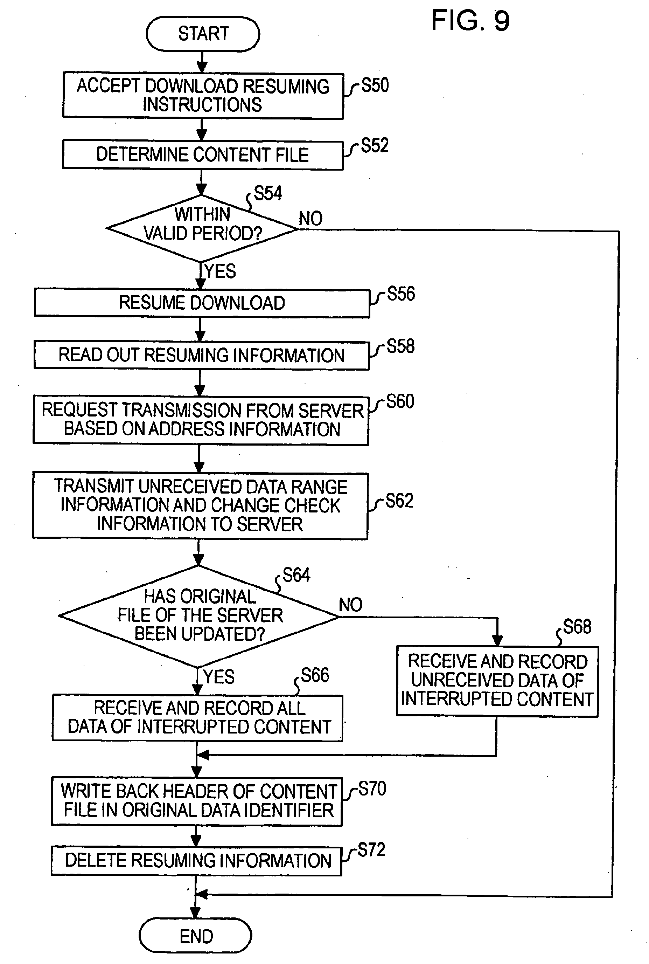

Next, the download resuming method with the portable information processing device 20 will be described with reference to Fig. 9. Fig. 9 is a flowchart showing a download resuming method according to the present embodiment.

As shown in Fig. 9, first, the resuming processing unit 24 of the portable information processing device 20 receives download resuming instructions for the content selected by user input (step S50).

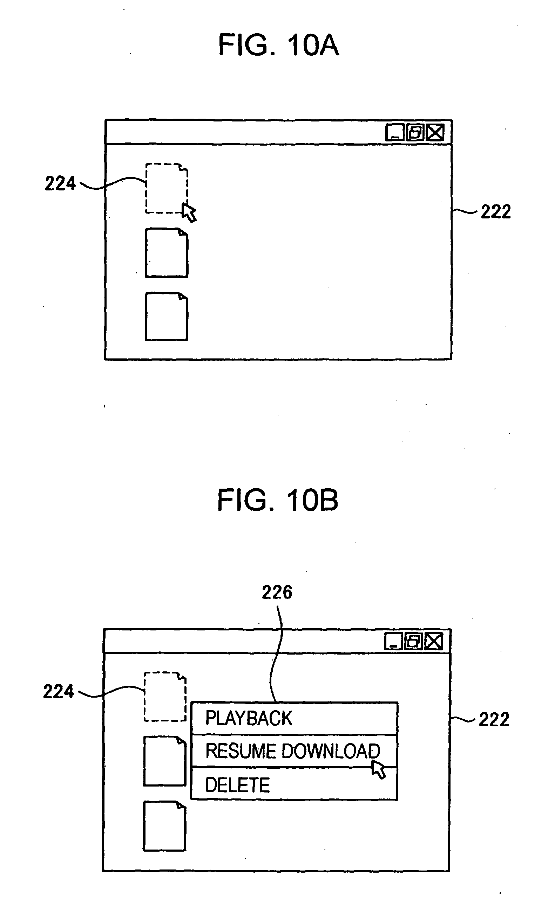

Now, the specific example of the download resuming instructions of the user will be described with reference to Fig. 10. As shown in Fig. 10A, on the display screen 222 of the portable information processing device 20 is incompletely displayed an icon 224 for the interrupted content (display in the example as a lighter color compared to a normal file), and upon the user selecting the icon 224 for the interrupted content thus incompletely displayed, as shown in Fig. 10B, for example "playback", "resume download", "delete", and so forth are displayed as a menu bar 226. By selecting "resume download" from this menu bar 226, the user can instruct resuming the download of the interrupted content 224 as to the portable information processing device 20. Note that by selecting "playback" from the above menu bar 226, playback of the received portion of data from the interrupted content 224 can be instructed, accordingly enabling playback of content with the portable information processing device 20.

Next, returning to Fig. 9, in step S52, the resuming processing unit 24 performs file distinguishing as to whether the file of the content receiving download resuming instructions is interrupted content wherein the download is incomplete, or whether it is normal content wherein the download completed (step S52). The file distinguishing is performed by examining the header 102 of the interrupted content file, and second footer 108b (see Fig. 2) of the trailing edge of the resuming information, for example. If the interruption identification information is described in the header 102 or second footer 108b, determination is made that this is a selected interruption content file, the flow is advanced to step S54, and otherwise, an error display is made to indicate that the content receiving the download resuming instructions are not the interrupted content, and the process is ended.

Further, in the event that a validity period is set to the above-described interruption content, the resuming processing unit 24 permits or prohibits downloading resuming, based on whether or not the current point-in-time is within the validity period (step S54). Specifically, the resuming processing unit 24 reads the license corresponding to the interrupted content from the removable storage medium 7, and compares this to the validity period information in the license and the current point-in-time. As a result, in the event that the current point-in-time is within the validity period, the resuming processing unit 24 transmits a transmission request for the interrupted content to the content distribution server 30, and resumes the download for the interrupted content (step S56). On the other hand, in the event that the validity period has been exceeded, the resuming processing unit 24 prohibits resuming of the interrupted content download, performs an error display to the effect that the validity period has expired, for example, and ends the processing. Note that the present step S54 may be omitted, in which case download resuming of the interrupted content is permitted regardless of whether the license is within the validity period.

Next, the resuming processing unit 24 reads resuming information in the file trailing end from the interrupted content file recorded on the removable storage medium 7 (step S58), the address information for the download source of the interrupted content, change check information, downloaded data amount information, backup information for legitimate data formatting information prior to re-writing to the interruption identification information, and so forth are obtained.

Thereafter the resuming processing unit 24 recognizes a location on the network wherein the original content for the interrupted content exists, and the communication protocol to access such location, based on the address information (URL or the like) in the read resuming information, and transmits a transmission request for the interrupted content to the content distribution server 30 (step S60). Further, the resuming processing unit 24 generates unreceived data range information of the interrupted content based on the downloaded data amount information in the resuming information, and transmits the unreceived data range information and the change check information (time stamp, hash value, and so forth) to the content distribution server 30.

The content distribution server 30 compares the change check information received from the portable information processing device 20 and the new change check information added to the original content of the interrupted content to be downloaded, according to the transmission request for the interrupted content from the portable information processing device 20, and determines whether or not the original content file on the server side is updated (i.e., whether or not the interrupted content on the portable information processing device 20 is the old content prior to updating) (step S64).

As a result of this determination, in the event that the original content file on the server side is updated, the content distribution server 30 transmits all of the new data of the interrupted content to the portable information processing device 20. The portable information processing device 20 then receives all of the data of the interrupted content and over-writes in the interrupted content file in the removable storage medium 7 (step S66). On the other hand, in the event that the original content file on the server side is not updated, the content distribution server 30 transmits only the unreceived data of the interrupted content to the portable information processing device 20. The portable information processing device 20 then receives the unreceived data of the interrupted content and adds and writes this to the interrupted content file in the removable storage medium 7 (step S68). In this event, only the unreceived data needs to be re-downloaded, so the data amount to be downloaded can be reduced.

Upon the re-download of such interrupted content being completed, the resuming processing unit 24 writes back the interruption identification information written in the header 102 in the interrupted content file into the previously added legitimate data format information (step S70). AT this time, the resuming processing unit 24 performs writing back using the backup information for legitimate data formatting information included in the resuming information read in the above step S58, thereby enabling reducing of the data amount to be downloaded because there is not need to re-download the legitimate data formatting information.

Further, the resuming processing unit 24 deletes the resuming information added to the interrupted content file 100 which is stored in the removable storage medium 7 (step S72). Thus, by deleting the resuming information no longer needed by the download being completed from the content file, an arrangement is made such that the resuming information does not become a cause for file formatting error.

In the processing up to this point, the re-downloading process of the interrupted content is completely ended. Note that in the above step S64, determination is made on the content distribution server 30 side as to whether there are any updates to the original content, but this should not be limited to this example, and an arrangement may be made wherein determination can be made at the portable information processing device 20 side as to whether there are any updates to the original content, by receiving the new change check information for the content from the content distribution server 30. In this event, the portable information processing device 20 transmits a transmission request specifying all of the data or the unreceived data of the interrupted content to the content distribution server 30 after determining whether there are any updates.

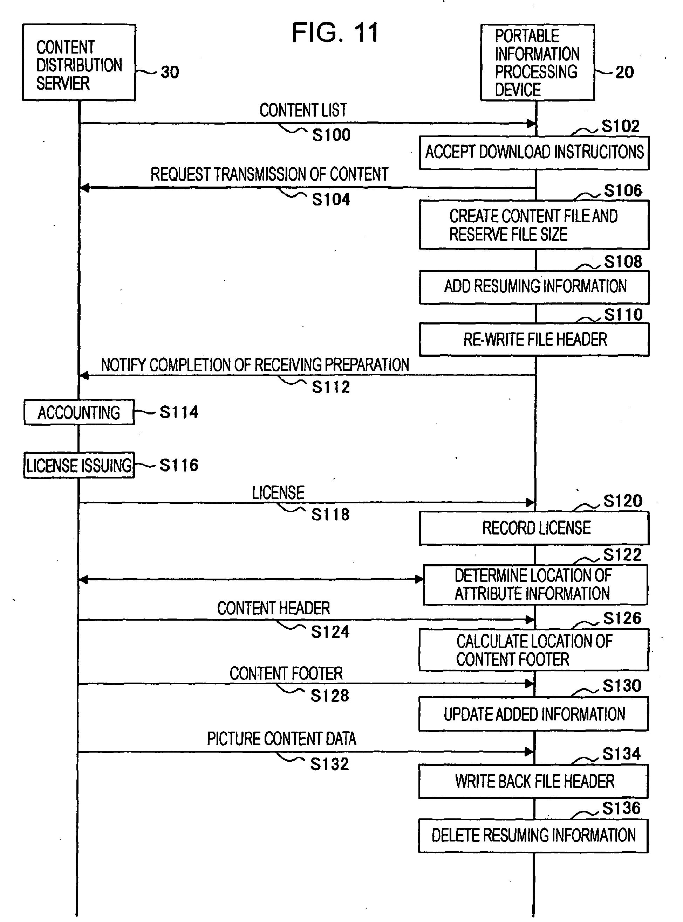

Next, a download method will be described, with reference to Figs. 11 and 12, wherein particular picture content including content attribute information after the content data (for example secure video content such as an MP4 file or the like) is downloaded supported while supporting playback during the download as well as interruption and resuming processing. Note that Fig. 11 is a sequence diagram illustrating a download method of a particular picture content file (MP4 file) according to the present embodiment, and Figs. 12A through 12F are explanatory diagrams illustrating the data configuration of the content file during the download at each point in time in Fig. 11.

As shown in Fig. 11, first, the content distribution server 30 transmits a content list which is a picture content (for example, an MP4 file of a secure video content such as a television program) menu which can be distributed to the portable information processing device 20 (step S100). The portable information processing device 20 receives the content list, and displays this on the display unit 220. Next, upon the user operating the input unit 210 to select the picture content desired for purchase, the portable information processing device 20 receives downloading instructions for the picture content selected by the user input (step S102), and transmits a transmission request for this picture content to the content distribution server 30 (step S104).

Next, the portable information processing device 20 creates a picture content file to be downloaded in the removable storage medium 7, and reserves a file size in the removable storage medium 7 to enable securely downloading the picture content (step S106). With this file size reservation, the storage region equating to the data amount for the picture content to be downloaded is secured in the removable storage medium 7. With the file size reservation, the picture content can be prevented from being without sufficient storage capacity in the removable storage medium 7 when the picture content is downloaded and being unable to store the picture content.

Further, the portable information processing device 20 adds resuming information to the trailing edge of a picture content file 300 created in the removable storage medium 7 (step S108). Additionally, the portable information processing device 20 re-writes the legitimate data formatting information described in the header of the leading edge of the content file created as described above into interruption identification information which does not match any other data files (step S110).

Fig. 12A is an explanatory diagram showing the data configuration of the picture content file created in the above steps S106 through S110. As shown in Fig. 12A, the picture content file 300 includes a header 302 for the entire file, dummy data 306 in the amount of data equivalent to the picture content to be downloaded, and resuming information 308 necessary for resuming the download of the picture content, in sequence from the leading edge. The dummy data 308 is zero data or the like generated by the above-mentioned file reservation. The resuming information 308 is the same as the resuming information 108 in Fig. 2 so the detailed description herein is omitted. At this point in time, the value of the downloaded data amount information in the resuming information 308 is zero.

Also, for example, in the case of a media bind model for secure picture content (a content distribution state wherein content may only be stored in one storage device, and cannot be copied to other storage devices), a file in the state of that shown in Fig. 12A needs to be created before downloading the license. This is because the picture content download cannot be completed unless there is sufficient data amount for storing the picture content in the removable storage medium 7 or the like, even if the picture content has been purchased and a license issued. With a removable storage medium 7 having sufficient empty capacity, a file state as shown in Fig. 12A indicates that reception preparation for the picture content on the portable information processing device 20 side is in order.

Next, upon the portable information processing device 20 transmitting a reception preparation complete notice to the content distribution server 30 (step S112), the content distribution server 30 performs accounting processing for the purchase amount of the picture content as to the user of the picture content (step S114) and issues a license for the picture content (step S116). Further, the content distribution server 30 transmits the license to the portable information processing device 20 (step S118), and the portable information processing device 20 accordingly records the received license in the license storage unit 74 of the removable storage medium 7 (step S120). With the file size reserved as described in step S106, by performing the accounting and license issuing in steps S114 and S116, even if the download is interrupted at or after the later-described step S132, the received picture content data can be played back based on the license.

Next, the portable information processing device 20 performs data communication with the content distribution server 30 and determines whether one of the picture content box and attribute information box included in the picture content to be downloaded is on the file leading edge side (step S122). As shown in the later-described Fig. 12F, the picture content box 304 is a data box (mdat box) including picture content data 304b (for example picture and audio data) and a header 304a having the data amount information thereof and attribute information for the codec information and the like, and the attribute information box 305 is a data box (moov box) including a content footer 307 having attribute information of picture content. The attribute information included in the attribute information box 305 is the playback table, content title, thumbnail images or the like, and is information necessary for playing back the picture content.

As a result of the determination in the above step S122, in the event that the attribute information box 305 is at the leading edge, the download may be continued as is in sequence from the leading edge of the picture content.

On the other hand, in the event that the picture content box 304 is on the leading edge side, the portable information processing device 20 first downloads the data from the leading edge of the picture content box 304 up to the portion wherein the data amount information of the picture content box 304 is described (i.e. the content header 304a) as shown in Fig. 12B, and obtains the data amount information (step S124). Next, the portable information processing device 20 calculates the starting location of the attribute information box 305 which is the next data box based on this data amount information (step S126).

Thereafter, the portable information processing device 20 downloads the content footer 307 at and after the attribute information box 305 at the trailing edge side, based on the starting location of the above-calculated attribute information box 305, without downloading the unreceived portion of the picture content box 304, as shown in Fig. 12C (step S128). When the download is interrupted during downloading of the content footer 307 at and after the attribute information box 305, the download at and after the attribute information box 305 becomes invalid from step S128.

Next, upon the content footer 307 being completely downloaded, the portable information processing device 20 updates a flag serving as added information included in the resuming information 308 (step S130), as shown in Fig. 12D. Specifically, by the portable information processing device 20 updating the flag showing whether or not the content footer 307 has completed downloading from "0" to "1", identification can be made that downloading of the content footer 307 in the picture content file 300 in the process of downloading has completed. With the completed download of the content footer 307, a state is created in which the data other than the picture content data (AV stream data) itself, i.e. content attribute information such as a playback table, content title, thumbnail image, and so forth can be referenced. Therefore, hereafter, the portable information processing device 20 can display the content title, thumbnail image, and so forth, enabling the user to select the picture content, as well as enabling the received data to be played back, fast-forwarded, rewound, and so forth while the picture content data is being downloaded.

Next, the portable information processing device 20 downloads the unreceived portion of the picture content data 304b (main picture) of the picture content box 304b from the leading edge thereof from the content distribution server 30, as shown in Fig. 12E (step S132). At this time, in the event that playback unit 26 of the portable information processing device 20 is corresponding to the above-mentioned flag, the playback unit 26 can play back the received picture content data 304b during downloading of the picture content data 304b. On the other hand, in the event that the playback unit 26 is not corresponding to the above-mentioned flag, the picture content file 300 is handled the same as the content file 100C in Fig. 8 described above, and the received content footer 307 is ignored.

Thereafter, as shown in Fig. 12E, in the event that the portable information processing device 20 completes the download of all of the picture content data 304b, the portable information processing device 20 writes back the interruption identification information written in the header 302 in the picture content file 300 into legitimate data formatting information backed up in the resuming information (step S134).

Further, as shown in Fig. 12F, the portable information processing device 20 deletes the resuming information added to the picture content file 300 having a completed download, and arranges the end of the file (End of file) to be the starting position of the resuming information (step S136).

Thus, the picture content file 300 of the downloaded MP4 file or the like has the content attribute information in a particular data format which is divided into the content header 304a of the file leading edge side and the video footer 307 of the trailing edge and described. In order to play back the picture content, all of the content attribute information is needed. In the case of such a file, if the data is downloaded from the picture content file from the leading edge as has been traditionally done, the interrupted picture content cannot be played back if the download is interrupted. Thus, with the present embodiment, the content 304a and content footer 307 which include the content attribute information necessary for playing back are downloaded before the picture content data 304 which is the main picture. Thus, even in the event the that download of the picture content data 304b is interrupted, the received picture content data 304b can be played back, using the received content attribute information.

Note that the file format of the picture content file 300 is not limited to the described example above, and for example, the content attribute information may be described only in the content header 304a or only in the content header 307a. In the event that the content attribute information is described only in the content header 304a, if the download is performed in order from the leading edge of the picture content file, the picture content in process of downloading or the picture content of which the download has been interrupted can be played back. Also, in the event of resuming the content download after interruption of the download, if the original file on the content distribution server 30 side has been updated (if the change check information on the content distribution server 30 side has been updated), the portable information processing device 20 re-downloads all of the interrupted content.

### Application Example

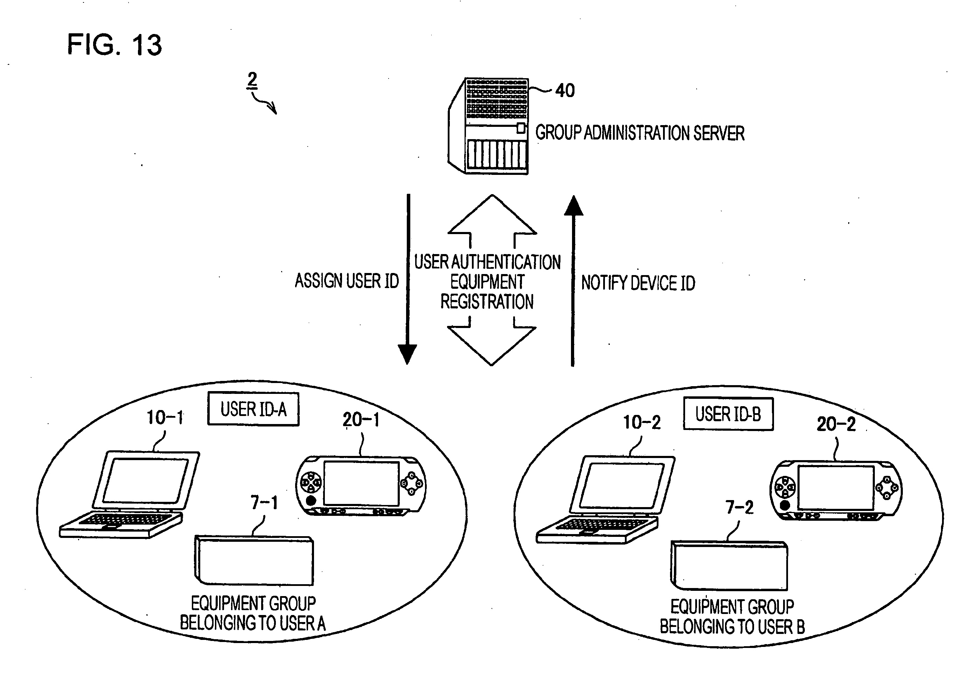

Next, an example applying the content distribution system 1 according to the above-described first embodiment to a copyright administration system 2 with a group administration method will be described with reference to Figs. 13 through 16.

First, the schematics of a copyright administration system 2 with a group administration system according to the present embodiment will described. The copyright administration system 2 with a group administration system is configured to manage content use between multiple devices (the information processing device 10 or the portable information processing device 20 and so forth). That is to say, this copyright administration system 2 limits content use between devices belonging to different users, so as to prevent illegal usage of content with certainty, such as widespread content distribution through the Internet and so forth. On the other hand, with the copyright administration system 2, the content may be shared freely to a certain degree between multiple devices belonging to the same user.

A copyright administration system 2 according to the present embodiment uses a copyright administration method which can perform copyright administration while permitting shared content within a private range and increasing freedom and usability of shared content between multiple devices belonging to the same user.

With a copyright administration system belonging to a traditional "check-in/check-out method", illegal content usage has been restricted by limiting the number of copies (number of times of check-in/check-out) of content by "content unit", based on a license serving as authentication information establishing usage restrictions of the content. With such a system, the copyright administration processing must be performed each time the content is copied ("check-in/check-out") between multiple information processing devices, whereby the system configuration becomes complicated and processes delayed, while freedom of content use within a personal use range is reduced and usability is low. Also, with a copyright administration system of such a tradition check-in/check-out method, the user must use the system while continually being cognizant of the copy source or the number of copies. Additionally, "content copy prevention to devices belonging to other people", which has been the primary goal of a copyright administration system, was not being realized.

Conversely, with the copyright administration system 2 with a group administration method, the administration unit for content use is set as a "unit of users first having the content", and performs copyright administration to permit/non-permit content use at each device by unit of user. Specifically, with the copyright administration system 2 with a group administration method, multiple devices belonging to each user are group-registered at the group administration server by user, and a user ID serving as a user identifier is assigned for each device in the group registration. Further, a user ID for the user is assigned as to the content each user obtains by purchasing and so forth. In the event that the user ID assigned to the device and the user ID assigned to the content are identical, use of the content at that device is permitted. Thus, the user can copy and play back the user's content freely between devices registered in a device group of the same user.

Next, the schematics of group registration with the copyright administration system 2 with a group administration method as described above will be described with reference to Fig. 13. Note that Fig. 13 is an explanatory diagram illustrating the schematics of group registration for the copyright administration system 2 according to the present embodiment.

As shown in Fig. 13, with the copyright administration system 2 with a group administration method, the various devices such as the information processing device 10 or the portable information processing device 20 access a group administration server 40 and perform user recognition to transmit a device ID, thereby registering the device on the group administration server 40, and obtaining the user ID. Also, the device registration of the removable storage medium 7 is performed similarly via the information processing device 10 or the portable information processing device 20. Thus the user ID obtained from the group administration server 40 is securely held within each device. Thus, each device can be group-registered by user at the group administration server 40. With the example in Fig. 13, the information processing device 10-1, the portable information processing device 20-1, and the removable storage medium 7-1 belonging to a user A are group-registered in a device group belonging to the user A, and the information processing device 10-2, the portable information processing device 20-2, and the removable storage medium 7-2 belonging to a user B are group-registered in a device group belonging to the user B.

With such a group registration, one device can only be group-registered in a single user device group, and cannot be simultaneously registered in a device group of a different user. Accordingly, in the event that the owner of the information processing device 10-1 changes from user A to user B, the group registration of the information processing device 10-1 needs to be changed, i.e. registration cancellation from the device group of the user A and re-registration to the device group of the user B must be performed.

Thus, with the copyright administration system 2 with a group administration method, each device is group registered for each user having the devices as to the group administration server 40. Consequently, between the devices registered in the device group of the same user, the content can be freely copied and used (playback, display, download resuming, and so forth). On the other hand, users can copy the content between devices registered to device groups of different users but cannot use the content.

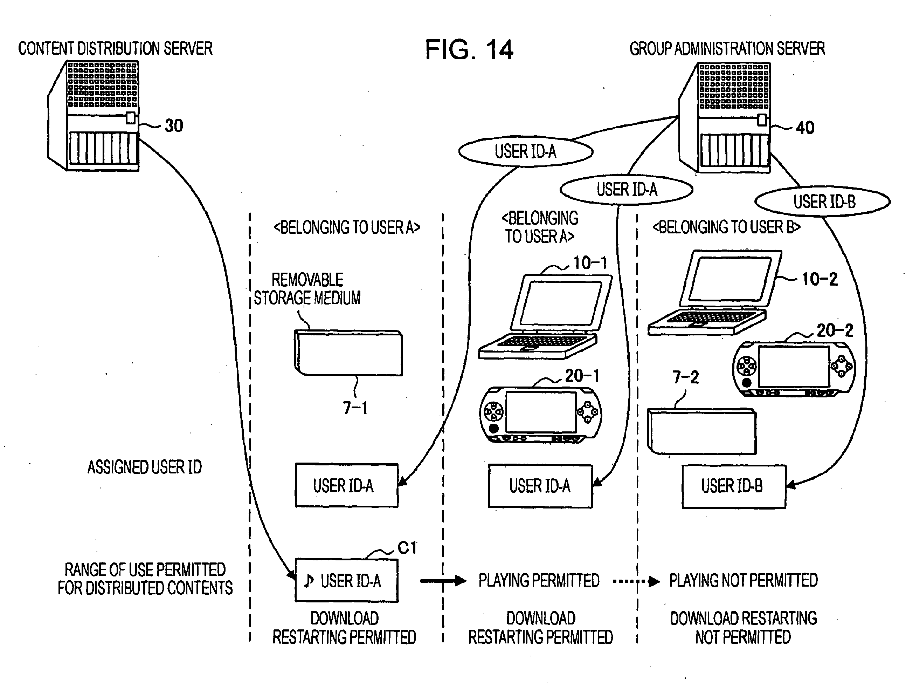

Now, a technique for managing content use with the copyright administration system 2 according to the present embodiment will be described with reference to Fig. 14. Note that Fig. 14 is an explanatory diagram illustrating a technique for managing content usage with the copyright administration system 2 according to the present embodiment.

As shown in Fig. 14, the information processing device 10-1, the portable information processing device 20-1, and the removable storage medium 7-1 belonging to a user A are group-registered in a device group belonging to the user A, so these devices have a user ID-A assigned thereto by the group administration server 40. Similarly, the information processing device 10-2, the portable information processing device 20-2, and the removable storage medium 7-2 belonging to a user B are group-registered in a device group belonging to the user B, so these devices have a user ID-B assigned thereto by the group administration server 40.

In this case, upon the user A purchasing content C1 from the content distribution server 30 using the information processing device 10-1 and the portable information processing device 20-1, the user ID-A of the user A who is the purchaser is added to the file of the content C1. In the event that the content C1 is stored in the removable storage medium 7-1, the user ID-A added to the content C1 is identical to the user ID-A added to the removable storage medium 7-1. Therefore, as long as the content C1 is stored in the removable storage medium 7-1, playback thereof can be performed with an arbitrary device, and also if the content C1 is interrupted content wherein the download is interrupted, the download thereof can be resumed with the removable storage medium 7-1. Also, in the event that the content C1 is copied to a storage medium (HDD or the like) of the information processing device 10-1 or the portable information processing device 20-1, the user ID-A is mutually identical, therefore the content C1 can be played and download resumed and so forth with the information processing device 10-1 or the portable information processing device 20-1 belonging to the user A.

However, in the event that the content C1 is copied to the storage medium within the information processing device 10-2 or the portable information processing device 20-2 belonging to the user B, or the removable storage medium 7-2 belonging to the user B, the user ID-B assigned to these devices and the user ID-A assigned to the content C1 are different, so the information processing device 10-2 or the portable information processing device 20-2 belonging to the user B cannot perform playback or download resuming of the content C1.

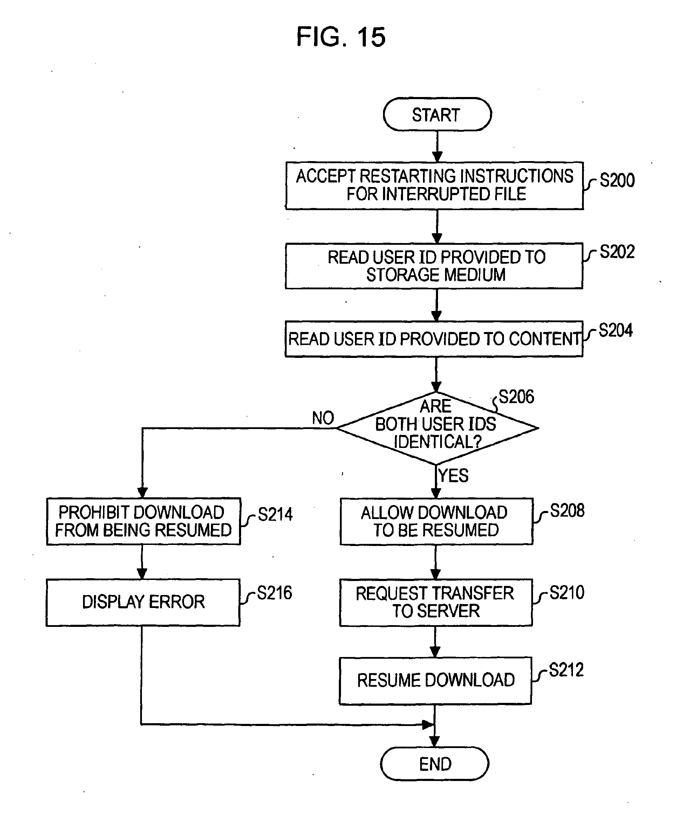

Next, a method for resuming downloading of interrupted content recorded in the removable storage medium 7 will be described with the copyright administration system 2 according to the present embodiment, with reference to Fig. 15. Fig. 15 is a flowchart illustrating a download resuming method with the copyright administration system 2 according to the present embodiment. Note that a case will be described wherein the removable storage medium 7 is mounted on the portable information processing device 20, and the download of the interrupted content in the removable storage medium 7 is resumed.

As shown in Fig. 15, first, the resuming processing unit 24 of the portable information processing device 20 receives download resuming instructions of the interrupted content stored in the removable storage medium 7 according to user input (step S200). Next, the resuming processing unit 24 reads the user ID assigned to the removable storage medium 7 from the removable storage medium 7 (step S202), as well as reads the user ID assigned to the interrupted content receiving the download resuming instructions from within the file of the interrupted content (step S204). Note that the processing sequence of the steps S202 and S204 may be reversed.

Further, the resuming processing unit 24 compares the user ID assigned to the removable storage medium 7 and the user ID assigned to the interrupted content, and determines whether or not both user IDs are identical (step S206). In the event that, as a result of this determination both user IDs are identical, the resuming processing unit 24 permits resuming of the downloading of the interrupted content (step S208), and transmits a transmission request for interrupted content to the content distribution server 30, based on address information read from a file in the interrupted content (step S210). Consequently, the download of the interrupted content is resumed, whereby the portable information processing device 20 receives the unreceived data or all of the data of the interrupted content from the content distribution server 30, and records this on the removable storage medium 7 (step S212).

On the other hand, in the event that as a result of determination in step S206, both user IDs are not identical, the resuming processing unit 24 prohibits download resuming of the interrupted content (step S214), and displays an error to the effect that the download of the interrupted content cannot be resumed (step S216).

Thus, by permitting/prohibiting download resuming of the interrupted content, based on whether the user IDs are identical or not identical, the content download resuming can be permitted only in the case wherein the owners of the removable storage medium 7 and interrupted content are identical. Therefore, content download resuming with a removable storage medium 7 which is not group-registered or download resuming by a person who illegally obtained the interrupted content can be prevented.

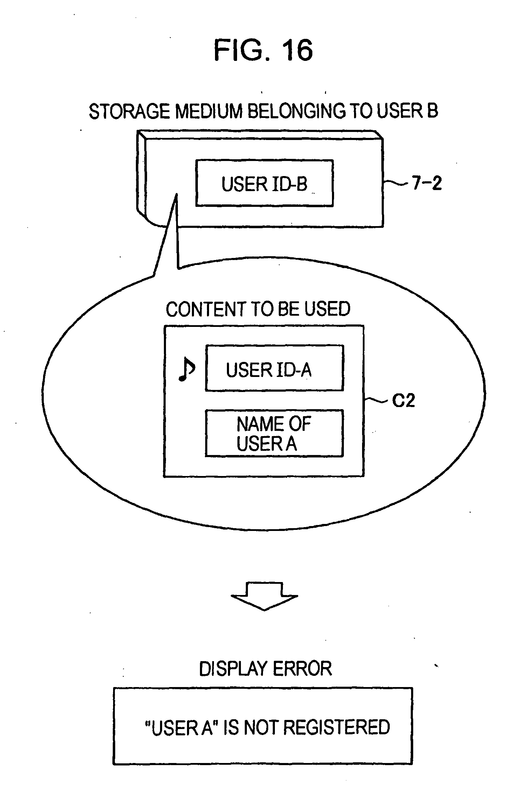

Now, a specific example of an error display in the event that content use is not permitted with the copyright administration system 2 according to the present embodiment as shown in step S216 in Fig. 15 will be described, with reference to Fig. 16. Fig. 16 is an explanatory diagram illustrating a specific example of an error display in the event of not authorizing usage of content stored on the removable storage medium 7 with the copyright administration system 2 according to the present embodiment.

As shown in Fig. 16, an example is supposed wherein the content C2 belonging to the user A is stored on the removable storage medium 7-2 belonging to the user B. The user ID-B of the user B is securely stored on the removable storage medium 7-2. On the other hand, the user ID-A of the user A is securely stored in a file of the content C2, and also text data "user A" serving as name information of the user A, which is associated with the user ID-A and is added to the file of the content C2. Such user name information is added to the content file along with the user ID, for example, at the time of content distribution by the content distribution server 30. The user ID is a binary value incomprehensible to the user, the user name information is text data which can be easily recognizable by the user. The user name information can also be set/changed to arbitrary text data desired by the user at the time of device group registration or content purchase.

With this situation, in the event that use of the content C2 in the removable storage medium 7-2 (for example, playback or download resuming) is attempted with the portable information processing device 20, the user ID-A assigned to the content C2 and the user ID-A assigned to the removable storage medium 7-2 are not identical, so the use thereof is prohibited. At this time, the portable information processing device 20 reads the name information of the user A added to the content C2, and displays an error display such as "'user A' is not registered", for example. Thus, by displaying an error including the name information of the user, the user can easily understand the reason for content use being prohibited.

The various devices in the content distribution system 1 according to the first embodiment of the present invention, and the downloading interruption and resuming method thereof have been described in detail herein.

With a traditional download interruption/resuming technique, the Web browser application performing the download or the downloading application using an independent work directory and database, which other applications cannot reference, to manage the state of the content file during downloading and information at the download source and so forth. Therefore, the arrangement has been such that only the application performing the download can resuming the download of the interrupted content, using the independently managed information as an origin point.

Conversely, the download interrupting/resuming techniques according to the present embodiment contrast with traditional download interrupting/resuming techniques. That is to say, the download interrupting/resuming techniques according to the present embodiment resume a download with an application or device using a content file, in the event of a download being resumed after the download is interrupted, such content file with the downloaded interrupted being the origin point thereof. With this technique, data administration is performed for multiple devices or applications with a shared format, thus even an application other than the application performing the download, or a device other than the device performing the download, can handle the resuming information necessary for download resuming or the interrupted content file. Therefore, when downloading a content file to a removable storage medium 7 with multiple devices or applications, the compatibility of the interruption and resuming processing of the download can be improved.

The download interruption/resuming techniques according to the present embodiment thus arranged are particularly effective in the case of recording a downloaded content file to the removable storage medium 7. For example, the interrupted content file stored in the removable storage medium 7 can be recognized as interrupted content file with any device or application. Therefore, the same content would not be inadvertently downloaded as duplicates on multiple devices. Also, in the event of a Web browser application for a certain device downloading a content file and writing to the removable storage medium 7, even if the removable storage medium 7 is removed during the download process and mounted onto another device, the download can be resumed based on the resuming information in the content file with the other device. Also, a content file of which the download is interrupted with an application of a certain device can be played back, displayed, and so forth with other applications or other devices.

Also, with the interruption/resuming techniques according to the present embodiment, the interrupted content file during the download process which is stored on the removable storage medium 7 can be used at the point prior to download completion. For example, a portion of the document content or image content of which the download is interrupted can be displayed, and also music content or picture content interrupted from a download can be played back partway.

Also, in the event that a Web browser application downloads a music/picture content file based on the techniques according to the present embodiment, another application can read the first half of the content file during the download. Therefore, if the partially downloaded content file has sufficient data for music/picture playback, the content during download can be played back, displayed, audio output, and so forth.

Also, creating an interrupted content file when the download is interrupted, and resuming the download of the interrupted content file can be performed with different applications. For example, a content file which a Web browser application has partially downloaded can be continually downloaded by a music/video playback application.

The preferred embodiments of the present invention have been described with reference to the attached diagrams, but it goes without saying that the present invention is not limited to these examples. It should be understood by those skilled in the art that various modifications, combinations, sub-combinations and alterations may occur depending on design requirements and other factors insofar as they are within the scope of the appended claims or the equivalents thereof.

The present invention contains subject matter related to Japanese Patent Application JP 2006-251769 filed in the Japanese Patent Office on September 15, 2006, the entire contents of which are incorporated herein by reference.

## Claims

1. An information processing device (20) for downloading content from a content distribution server (30) via a network (5), comprising:
a mounting unit (260) for detachably mounting a storage medium (7) thereto;
a downloading unit (200:22) arranged to receive content to be downloaded from said content distribution server, and to record said received content into a content file (100) on said storage medium;
an interruption processing unit (200:23) arranged to record resuming information (108) into said content file on said storage medium, said resuming information being information necessary for resuming an interrupted content download in the event that the reception for said content from said content distribution server by said downloading unit is interrupted; and
a resuming processing unit (200:24) arranged to read said resuming information from said content file on storage medium in the event of resuming the reception of said interrupted content, and to transmit a transmission request for said interrupted content to said content distribution server, based on said read resuming information;
wherein said downloading unit receives said interrupted content transmitted from said content distribution server according to the transmission request for said interrupted content, and records said received interrupted content into said content file on said storage medium.

2. An information processing device (20) for downloading content from a content distribution server (30) via a network (5), comprising:
a mounting unit (260) for detachably mounting a storage medium (7) thereto;
a downloading unit (200:22) arranged to receive content to be downloaded from said content distribution server, and to record said received content into a content file on said storage medium;
an interruption processing unit (200:23) arranged to record resuming information (108) into said content file on said storage medium, said resuming information being information necessary for resuming said content download in the event that the reception for said content from said content distribution server by said downloading unit is interrupted.

3. The information processing device according to Claim 2, wherein said resuming information includes address information of the download source of said content.

4. The information processing device according to Claim 2, wherein said interruption processing unit records interruption identification information expressing that said content reception by said downloading unit has not been completed to said storage medium.

5. The information processing device according to Claim 4, wherein said interruption processing unit re-writes the data format information in said content file stored on said storage medium into said interruption identification information;
and wherein said interruption processing unit records backup information of the data format information before said re-writing on said storage medium as said resuming information.

6. The information processing device according to Claim 2, wherein said resuming information includes data amount information for received data of said content.

7. The information processing device according to Claim 2, wherein said resuming information includes change check information corresponding to said content received from said content distribution server.

8. The information processing device according to Claim 2, wherein said interruption processing unit records said resuming information corresponding to the interruption content on said storage medium in the event that said content reception from said content distribution server by said downloading unit is interrupted.

9. The information processing device according to Claim 2, wherein said interruption processing unit updates said resuming information corresponding to the content being received, which is recorded on said storage medium, each time only a predetermined amount of said content data is received, during reception of said content from said content distribution server by said downloading unit.

10. The information processing device according to Claim 2, wherein said downloading unit receives content attribute information necessary for said content use from said content distribution server and records on said storage medium, following which downloading unit receives said content and records on said storage medium.

11. The information processing device according to Claim 10, further comprising:
a playback unit (200:27, 220, 230) arranged to play back said content stored on said storage medium;
wherein said playback unit is arranged to play back the received data of the interrupted content, using said content attribute information corresponding to the interrupted content, in the event that the reception of said content from said content distribution server by said downloading unit is interrupted.

12. An information processing device (20) for downloading content from a content distribution server (30) via a network (5), comprising:
a mounting unit (260) for detachably mounting a storage medium (7) thereto;
a resuming processing unit (200:24) arranged to read resuming information from a content file on said storage media where interrupted content is stored, said interrupted content being content that has been partially recorded on said storage medium prior to an interruption of the reception from said content distribution server, said resuming information being information necessary for resuming a download of the interrupted content, and said resuming processing unit further being arranged to transmit a transmission request for said interrupted content to said content distribution server based on said read resuming information; and
a downloading unit arranged to receive said interrupted content transmitted from said content distribution server according to the transmission request for said interrupted content, and to record said received interrupted content into said content file on said storage medium.

13. The information processing device according to Claim 12, wherein said resuming information includes address information of the download source of said content;
and wherein said downloading unit is arranged to access said interrupted content stored in said content distribution server, based on said address information.

14. The information processing device according to Claim 12, wherein said resuming processing unit determines whether or not the content is said interrupted content, based on whether or not the interruption identification information corresponding to the content stored on said storage media is stored on said storage medium.

15. The information processing device according to Claim 14, wherein said resuming processing unit reads the data format information in the content file upon receiving selection instructions for the content stored on said storage medium, and in the event that the data format information is said interruption identification information, a transmission request for said content is transmitted to said content distribution server.

16. The information processing device according to Claim 15, wherein said resuming processing unit re-writes said interruption identification information in said interruption content file into the data format information added to said interruption content beforehand, in the event that reception of said interruption content by said downloading unit has been completed.

17. The information processing device according to Claim 16, wherein said resuming information includes backup information for said data format information;
and wherein said resuming processing unit returns said interruption identification information to said data format information, based on said backup information.

18. The information processing device according to Claim 12, wherein said resuming information includes data amount information for received data of said interrupted content;
wherein said resuming processing unit reads the data amount information for said data received from said storage medium, and transmits an unreceived data range information which is generated based on the data amount information to said content distribution server;
and wherein said downloading unit receives the unreceived data of said interrupted content from said content distribution server.

19. The information processing device according to Claim 12, wherein said resuming information includes change check information corresponding to said interrupted contents received from said content distribution server before the time of said interruption;
wherein said resuming processing unit reads said change check information from said storage medium and transmits to said content distribution server in the event of resuming said interrupted content reception;
and wherein said download unit receives all of the data or the unreceived data of said interrupted content from said content distribution server, based on comparison results wherein said change check information with said content distribution server and the new change check information corresponding to said interruption content are compared.

20. The information processing device according to Claim 12, wherein said resuming information includes change check information corresponding to said interrupted contents received from said content distribution server before the time of said interruption;
wherein said resuming processing unit reads said change check information from said storage medium in the event of resuming reception of said interruption content, and receives the new change check information corresponding to said interruption content from said content distribution server, and based on comparison results from a comparison between said read change check information and said new change check information, a transmission request for all data or unreceived data of said interrupted content is transmitted to said content distribution server.

21. The information processing device according to Claim 12, wherein said resuming processing unit deletes said resuming information stored in said storage medium in the event that reception of said interruption content by said download unit has been completed.

22. The information processing device according to Claim 12, further comprising:
a clock unit (200:26) configured to measure the current point-in-time;
wherein said resuming processing unit reads valid period information corresponding to said interrupted content stored in said storage medium, compares the current point-in-time measured by said clock unit and said valid period information, and in the event said current point-in-time is within the valid period, transmits a transmission request for said interruption content to said content distribution server.

23. The information processing device according to Claim 12, wherein said resuming processing unit determines whether or not the user identifier added to said storage media and a user identifier added to said interruption content are identical, and in the event said both user identifiers are identical, a transmission request for said interruption content is transmitted to said content distribution server.

24. The information processing device according to Claim 12, further comprising:
a playback unit (200:27, 220, 230) arranged to play back said content stored on said storage medium;
wherein content attribute information necessary for said interrupted content use is stored on said storage medium;
and wherein said playback unit plays back received data of said interrupted content, using said content attribute information.

25. The information processing device according to Claim 12, further comprising:
a playback unit (200:27, 220, 230) arranged to play back said content stored on said storage medium;
wherein content attribute information necessary for said interrupted content use is stored on said storage medium;
and wherein received data from said interrupted content is played back using said content attribute information with said playback unit, while receiving the unreceived data of said interruption content from said content distribution server by said download unit.

26. A downloading method for an information processing device (20) downloading content from a content distribution server (30) via a network (5), comprising the steps of:
receiving content to be downloaded from said content distribution server while recording said received content into a content file (100) on a storage medium (7) detachably mounted to said information processing device;
recording resuming information (108) into said content file on said storage medium, said resuming information being information necessary for resuming the download of the interrupted content in the event that the reception of said content from said content distribution server is interrupted;
reading said resuming information from said content file on said storage medium in the event of resuming the reception of said interrupted content which is stored on said storage medium;
transmitting a transmission request for said interrupted content to said content distribution server based on said read resuming information; and
receiving said interrupted content transmitted from said content distribution server according to the transmission request for said interrupted content, and recording said received interrupted content into said content file on said storage medium.

27. A downloading interruption method for an information processing device (20) downloading content from a content distribution server (30) via a network (5), comprising the steps of:
receiving content to be downloaded from said content distribution server while recording said received content into a content file (100) on a storage medium (7) detachably mounted to said information processing device; and
recording resuming information (108) into said content file on said storage medium, said resuming information being information necessary for resuming said content download in the event that the reception of said content from said content distribution server is interrupted.

28. A download resuming method for an information processing device (20) downloading content from a content distribution server (30) via a network(s), comprising the steps of:
reading resuming information from a content file (100) on a storage medium which is detachable from said information processing device, said content file being a file in which interrupted content is stored, said interrupt content being content that has been partially recorded on said storage medium prior to interruption of reception from said content distribution server has been interrupted, and resuming information being information necessary for resuming the download of the interrupted content;
transmitting a transmission request for said interruption content based on said read resuming information to said content distribution server; and
receiving said interrupted content transmitted from said content distribution server according to the transmission request for said interrupted content, and recording said received interrupted content into said content file on said storage medium.

29. A program causing a computer to function as an information processing device downloading content from a content distribution server via a network, the program causing the computer to execute the method according to claim 26.

30. A program causing a computer to function as an information processing device downloading content from a content distribution server via a network, the program causing the computer to execute the method according to claim 27.

31. A program causing a computer to function as an information processing device downloading content from a content distribution server via a network, the program causing the computer to execute the method according to claim 28

## Patentansprüche

1. Informationsverarbeitungseinrichtung (20) zum Herunterladen von Inhalt von einem Inhaltsverteilungsserver (30) über ein Netzwerk (5), welche umfasst:
eine Befestigungseinheit (260) zum lösbaren Befestigen eines Speichermediums (7) daran;
eine Herunterladeeinheit (200:22), die eingerichtet ist, Inhalt zu empfangen, der vom Inhaltsverteilungsserver herunterzuladen ist, und um den empfangenen Inhalt in einer Inhaltsdatei (100) auf dem Speichermedium aufzuzeichnen;
eine Unterbrechungsverarbeitungseinheit (200:23), die eingerichtet ist, Wiederaufnahmeinformation (108) in die Inhaltsdatei auf dem Speichermedium aufzuzeichnen, wobei die Wiederaufnahmeinformation Information ist, welche zum Fortsetzen eines unterbrochenen Inhalts notwendig ist, welche in dem Fall heruntergeladen wird, dass der Empfang für den Inhalt von dem Inhaltsverteilungsserver durch die Herunterladeeinheit unterbrochen ist; und
eine Wiederaufnahmeverarbeitungseinheit (200:24), die eingerichtet ist, die Wiederaufnahmeinformation von der Inhaltsdatei auf dem Speichermedium in dem Fall einer Fortsetzung des Empfangs des unterbrochenen Inhalts zu lesen, und um eine Übertragungsanforderung nach dem unterbrochenen Inhalt zum Inhaltsverteilungsserver auf Basis der gelesenen Wiederaufnahmeinformation zu übertragen;
wobei die Herunterladeeinheit den unterbrochenen Inhalt empfängt, der vom Inhaltsverteilungsserver gemäß der Übertragungsanforderung nach dem unterbrochenen Inhalt übertragen wird und den empfangenen unterbrochenen Inhalt in die Inhaltsdatei auf dem Speichermedium aufzeichnet.

2. Informationsverarbeitungseinrichtung (20) zum Herunterladen von Inhalt von einem Inhaltsverteilungsserver (30) über ein Netzwerk (5), welche umfasst:
eine Befestigungseinheit (260) zum lösbaren Befestigen eines Speichermediums (7) daran;
eine Herunterladeeinheit (200:22), die eingerichtet ist, Inhalt, der von dem Inhaltsverteilungsserver herunterzuladen ist, zu empfangen, und um den empfangenen Inhalt in eine Inhaltsdatei auf dem Speichermedium aufzuzeichnen;
eine Unterbrechungsverarbeitungseinheit (200:23), die eingerichtet ist, Wiederaufnahmeinformation (108) in die Inhaltsdatei auf dem Speichermedium aufzuzeichnen, wobei die Wiederaufnahmeinformation Information ist, welche zum Fortsetzen des Inhalts notwendig ist, der in dem Fall heruntergeladen wird, dass der Empfang für den Inhalt von dem Inhaltsverteilungsserver durch die Herunterladeeinheit unterbrochen ist.

3. Informationsverarbeitungseinrichtung nach Anspruch 2, wobei die Wiederaufnahmeinformation Adressinformation der Herunterladequelle des Inhalts umfasst.

4. Informationsverarbeitungseinrichtung nach Anspruch 2, wobei die Unterbrechungsverarbeitungseinheit Unterbrechungsidentifikationsinformation aufzeichnet, welche ausdrückt, dass der Inhaltsempfang durch die Herunterladeeinheit zum Speichermedium nicht beendet ist.

5. Informationsverarbeitungseinrichtung nach Anspruch 4, wobei die Unterbrechungsverarbeitungseinheit die Datenformatinformation in der Inhaltsdatei, welche auf dem Speichermedium gespeichert ist, in die Unterbrechungsidentifikationsinformation umschreibt;
und wobei die Unterbrechungsverarbeitungseinheit Sicherungsinformation der Datenformatinformation vor dem Umschreiben auf dem Speichermedium als die Wiederaufnahmeinformation aufzeichnet.

6. Informationsverarbeitungseinrichtung nach Anspruch 2, wobei die Wiederaufnahmeinformation Datenmengeninformation für empfangene Daten des Inhalts umfasst.

7. Informationsverarbeitungseinrichtung nach Anspruch 2, wobei die Wiederaufnahmeinformation Änderungsprüfinformation entsprechend dem Inhalt umfasst, der von dem Inhaltsverteilungsserver empfangen wird.

8. Informationsverarbeitungseinrichtung nach Anspruch 2, wobei die Unterbrechungsverarbeitungseinheit die Wiederaufnahmeinformation entsprechend dem Unterbrechungsinhalt auf dem Speichermedium in dem Fall aufzeichnet, dass der Inhaltsempfang vom Inhaltsverteilungsserver durch die Herunterladeeinheit unterbrochen ist.

9. Informationsverarbeitungseinrichtung nach Anspruch 2, wobei die Unterbrechungsverarbeitungseinheit die Wiederaufnahmeinformation entsprechend dem Inhalt, der gerade empfangen wird, aktualisiert, der auf dem Speichermedium aufgezeichnet ist, jedes Mal, wenn nur eine vorher festgelegte Menge der Inhaltsdaten empfangen wird, während des Empfangs des Inhalts vom Inhaltsverteilungsserver durch die Herunterladeeinheit.

10. Informationsverarbeitungseinrichtung nach Anspruch 2, wobei die Herunterladeeinheit Inhaltsattributinformation, welche für die Inhaltsverwendung notwendig ist, vom Inhaltsverteilungsserver empfängt und auf dem Speichermedium aufzeichnet, nachfolgend, welche Herunterladeeinheit den Inhalt empfängt und auf dem Speichermedium aufzeichnet.

11. Informationsverarbeitungseinrichtung nach Anspruch 10, welche außerdem umfasst:
eine Wiedergabeeinheit (200:27, 220, 230), die eingerichtet ist, den Inhalt, der auf dem Speichermedium gespeichert ist, wiederzugeben;
wobei die Wiedergabeeinheit eingerichtet ist, die empfangenen Daten des unterbrochenen Inhalts wiederzugeben, wobei die Inhaltsattributinformation entsprechend dem unterbrochenen Inhalt verwendet wird, in dem Fall, dass der Empfang des Inhalts vom Inhaltsverteilungsserver durch die Herunterladeeinheit unterbrochen ist.

12. Informationsverarbeitungseinrichtung (20) zum Herunterladen von Inhalt von einem Inhaltsverteilungsserver (30) über ein Netzwerk (5), welche umfasst:
eine Befestigungseinheit (260) zum lösbaren Befestigen eines Speichermediums (7) daran;
eine Wiederaufnahmeverarbeitungseinheit (200:24), die eingerichtet ist, Wiederaufnahmeinformation von einer Inhaltsdatei auf dem Speichermedium zu lesen, wo unterbrochener Inhalt gespeichert ist, wobei der unterbrochene Inhalt Inhalt ist, der partiell auf dem Speichermedium vor einer Unterbrechung des Empfangs vom Inhaltsverteilungsserver aufgezeichnet ist, wobei die Wiederaufnahmeinformation Information ist, die zur Wiederaufnahme eines Herunterladens des unterbrochenen Inhalts notwendig ist, und die Wiederaufnahmeverarbeitungseinheit außerdem eingerichtet ist, eine Übertragungsanforderung nach dem unterbrochenen Inhalt zum Inhaltsverteilungsserver auf Basis der gelesenen Wiederaufnahmeinformation zu übertragen; und
eine Herunterladeeinheit, welche eingerichtet ist, den unterbrochenen Inhalt, der vom Inhaltsverteilungsserver übertragen wird, gemäß der Übertragungsanforderung nach dem unterbrochenen Inhalt empfangen, und um den empfangenen unterbrochenen Inhalt in die Inhaltsdatei auf dem Speichermedium aufzuzeichnen.

13. Informationsverarbeitungseinrichtung nach Anspruch 12, wobei die Wiederaufnahmeinformation Adressinformation der Herunterladequelle des Inhalts umfasst;
und wobei die Herunterladeeinheit eingerichtet ist, auf den unterbrochenen Inhalt, der im Inhaltsverteilungsserver gespeichert ist, auf Basis der Adressinformation zuzugreifen.

14. Informationsverarbeitungseinrichtung nach Anspruch 12, wobei die Wiederaufuahmeverarbeitungseinheit bestimmt, ob oder nicht der Inhalt der unterbrochene Inhalt ist, auf Basis davon, ob oder nicht die Unterbrechungsidentifikationsinformation entsprechend dem Inhalt, welche auf dem Speichermedium gespeichert ist, auf dem Speichermedium gespeichert ist.

15. Informationsverarbeitungseinrichtung nach Anspruch 14, wobei die Wiederaufuahmeverarbeitungseinheit die Datenformatinformation in der Inhaltsdatei beim Empfang von Auswahlinstruktionen nach dem Inhalt liest, der auf dem Speichermedium gespeichert ist, und in dem Fall, dass die Datenformatinformation die Unterbrechungsidentifikationsinformation ist, eine Übertragungsanforderung nach dem Inhalt zum Inhaltsverteilungsserver übertragen wird.

16. Informationsverarbeitungseinrichtung nach Anspruch 15, wobei die Wiederaufnahmeverarbeitungseinheit die Unterbrechungsidentifikationsinformation in der Unterbrechungsinhaltsdatei in die Datenformatinformation umschreibt, welche dem Unterbrechungsinhalt hinzugefügt ist, in dem Fall, dass Empfang des Unterbrechungsinhalts durch die Herunterladeeinheit beendet wurde.

17. Informationsverarbeitungseinrichtung nach Anspruch 16, wobei die Wiederaufnahmeinformation Sicherungsinformation für die Datenformatinformation umfasst; und
wobei die Wiederaufnahmeverarbeitungseinheit die Unterbrechungsidentifikationsinformation zur Datenformatinformation auf Basis der Sicherungsinformation zurückbringt.

18. Informationsverarbeitungseinrichtung nach Anspruch 12, wobei die Wiederaufnahmeinformation Datenmengeninformation für Empfangsdaten des unterbrochenen Inhalts umfasst;
wobei die Wiederaufnahmeverarbeitungseinheit die Datemnengeninformation für die Daten, welche vom Speichermedium empfangen werden, liest, und eine Nichtempfangsdatenbereichsinformation, welche auf Basis der Datenmengeninformation erzeugt wird, zum Inhaltsverteilungsserver überträgt;
und wobei die Herunterladeeinheit die nichtempfangenen Daten des unterbrochenen Inhalts vom Inhaltsverteilungsserver empfängt.

19. Informationsverarbeitungseinrichtung nach Anspruch 12, wobei die Wiederaufnahmeinformation Änderungsprüfinformation entsprechend den unterbrochenen Inhalten umfasst, welche vom Inhaltsverteilungsserver vor dem Zeitpunkt der Unterbrechung empfangen werden;
wobei die Wiederaufnahmeverarbeitungseinheit die Änderungsprüfinformation vom Speichermedium liest und zum Inhaltsverteilungsserver in dem Fall überträgt, wenn der unterbrochene Inhaltsempfang wieder fortgesetzt wird;
und wobei die Herunterladeeinheit alle Daten oder die nichtempfangenen Daten des unterbrochenen Inhalts vom Inhaltsverteilungsserver empfängt, auf Basis von Vergleichsergebnissen, wobei die Änderungsprüfinformation mit dem Inhaltsverteilungsserver und die neue Änderungsprüfinformation entsprechend dem Unterbrechungsinhalt verglichen werden.

20. Informationsverarbeitungseinrichtung nach Anspruch 12, wobei die Wiederaufnahmeinformation Änderungsprüfinformation entsprechend den unterbrochenen Inhalten, welche vom Inhaltsverteilungsserver vor dem Zeitpunkt der Unterbrechung empfangen werden, umfasst;
wobei die Wiederaufnahmeverarbeitungseinheit die Änderungsprüfinformation vom Speichermedium in dem Fall liest, wo Empfang des Unterbrechungsinhalts fortgesetzt wird, und die neue Änderungsprüfinformation entsprechend dem Unterbrechungsinhalt vom Inhaltsverteilungsserver empfängt, und auf Basis von Vergleichsergebnissen von einem Vergleich zwischen der gelesenen Änderungsprüfinformation und der neuen Änderungsprüfinformation eine Übertragungsanforderung für alle Daten oder nichtempfangenen Daten des unterbrochenen Inhalts zum Inhaltsverteilungsserver übertragen wird.

21. Informationsverarbeitungseinrichtung nach Anspruch 12, wobei die Wiederaufnahmeverarbeitungseinheit die Wiederaufnahmeinformation, welche im Speichermedium gespeichert ist, in dem Fall löscht, dass Empfang des Unterbrechungsinhalts durch die Herunterladeeinheit beendet wurde.

22. Informationsverarbeitungseinrichtung nach Anspruch 12, welche außerdem umfasst:
eine Takteinheit (200:26), die konfiguriert ist, den aktuellen Zeitpunkt zu messen;
wobei die Wiederaufnahmeverarbeitungseinheit gültige Periodeninformation entsprechend dem unterbrochenen Inhalt, der im Speichermedium gespeichert ist, liest, den aktuellen Zeitpunkt, welcher durch die Takteinheit gemessen wird, und die gültige Periodeninformation vergleicht, und in dem Fall, dass der aktuelle Zeitpunkt innerhalb der gültigen Periode ist, eine Übertragungsanforderung nach dem Unterbrechungsinhalt zum Inhaltsverteilungsserver überträgt.

23. Informationsverarbeitungseinrichtung nach Anspruch 12, wobei die Wiederaufnahmeverarbeitungseinheit bestimmt, ob oder nicht der Benutzeridentifizierer, der dem Speichermedium hinzugefügt ist, und ein Benutzeridentifizierer, der dem Unterbrechungsinhalt hinzugefügt ist, identisch sind, und in dem Fall, dass beide Benutzeridentifizierer identisch sind, eine Übertragungsanforderung nach dem Unterbrechungsinhalt zum Inhaltsverteilungsserver übertragen wird.

24. Informationsverarbeitungseinrichtung nach Anspruch 12, welche außerdem umfasst:
eine Wiedergabeeinheit (200:27, 220, 230), die eingerichtet ist, den Inhalt, der auf dem Speichermedium gespeichert ist, wiederzugeben;
wobei die Inhaltsattributinformation, welche für den unterbrochenen Inhalt notwendig ist, auf dem Speichermedium gespeichert ist;
und wobei die Wiedergabeeinheit empfangene Daten des unterbrochenen Inhalts unter Verwendung der Inhaltsattributinformation wiedergibt.

25. Informationsverarbeitungseinrichtung nach Anspruch 12, welche außerdem umfasst:
eine Wiedergabeeinheit (200:27, 220, 230), die eingerichtet ist, den Inhalt, der auf dem Speichermedium gespeichert ist, wiederzugeben;
wobei die Inhaltsattributinformation, die für die unterbrochene Inhaltsverwendung notwendig ist, auf dem Speichermedium gespeichert ist;
und wobei Empfangsdaten vom unterbrochenen Inhalt unter Verwendung der Inhaltsattributinformation mit der Wiedergabeeinheit wiedergegeben wird, während die nichtempfangenen Daten des Unterbrechungsinhalts von dem Inhaltsverteilungsserver durch die Herunterladeeinheit empfangen werden.

26. Herunterladeverfahren für eine Informationsverarbeitungseinrichtung (20), welche Inhalt von einem Inhaltsverteilungsserver (30) über ein Netzwerk (5) herunterlädt, welches folgende Schritte umfasst:
Empfangen von Inhalt, der von dem Inhaltsverteilungsserver herunterzuladen ist, während der empfangene Inhalt auf eine Inhaltsdatei (100) auf einem Speichermedium (7) aufgezeichnet wird, welches lösbar an der Informationsverarbeitungseinrichtung befestigt ist;
Aufzeichnen von Wiederaufnahmeinformation (108) auf die Inhaltsdatei auf dem Speichermedium, wobei die Wiederaufnahmeinformation Information ist, die notwendig ist, das Herunterladen des unterbrochenen Inhalts für den Fall fortzusetzen, dass der Empfang des Inhalts vom Inhaltsverteilungsserver unterbrochen ist;
Lesen der Wiederaufnahmeinformation von der Inhaltsdatei auf dem Speichermedium für den Fall, dass der Empfang des unterbrochenen Inhalts, der auf dem Speichermedium gespeichert ist, wieder fortgesetzt wird;
Übertragen einer Übertragungsanforderung nach dem unterbrochenen Inhalt zum Inhaltsverteilungsserver auf Basis der gelesenen Wiederaufnahmeinformation; und
Empfangen des unterbrochenen Inhalts, der vom Inhaltsverteilungsserver übertragen wird, gemäß der Übertragungsanforderung nach dem unterbrochenen Inhalt, und Aufzeichnen des empfangenen unterbrochenen Inhalts in die Inhaltsdatei auf das Speichermedium.

27. Herunterlade-Unterbrechungsverfahren für eine Informationsverarbeitungseinrichtung (20), um Inhalt von einem Inhaltsverteilungsserver (30) über ein Netzwerk (5) herunterzuladen, welches folgende Schritte umfasst:
Empfangen von Inhalt, der von dem Inhaltsverteilungsserver herunterzuladen ist, während der empfangene Inhalt in eine Inhaltsdatei (100) auf einem Speichermedium (7) aufgezeichnet wird, welches lösbar an der Informationsverarbeitungseinrichtung befestigt ist; und
Aufzeichnen von Wiederaufnahmeinformation (108) in die Inhaltsdatei auf dem Speichermedium, wobei die Wiederaufnahmeinformation notwendig ist, um den Inhalt, der heruntergeladen ist, in dem Fall fortzusetzen, dass der Empfang des Inhalts von dem Inhaltsverteilungsserver unterbrochen ist.

28. Herunterlade-Wiederaufnahmeverfahren für eine Informationseinrichtung (20), welche Inhalt von einem Inhaltsverteilungsserver (30) über ein Netzwerk (Netzwerke) herunterlädt, welches folgende Schritte umfasst:
Lesen von Wiederaufnahmeinformation von einer Inhaltsdatei (100) auf einem Speichermedium, welches von der Informationsverarbeitungseinrichtung lösbar ist, wobei die Inhaltsdatei eine Datei ist, in welcher unterbrochener Inhalt gespeichert ist, wobei der unterbrochene Inhalt Inhalt ist, der partiell auf dem Speichermedium aufgezeichnet ist, bevor Empfangsunterbrechung von dem Inhaltsverteilungsserver unterbrochen wurde, und Wiederaufnahme von Information, welche Information ist, welche zum Wiederaufnehmen des Herunterladens des unterbrochenen Inhalts notwendig ist;
Übertragen einer Übertragungsanforderung nach dem Unterbrechungsinhalt auf Basis der gelesenen Wiederaufnahmeinformation zum Inhaltsverteilungsserver; und
Empfangen des unterbrochenen Inhalts, der vom Inhaltsverteilungsserver übertragen wird, gemäß der Übertragungsanforderung nach dem unterbrochenen Inhalt, und Aufzeichnen des empfangenen unterbrochenen Inhalts in die Inhaltsdatei auf dem Speichermedium.

29. Programm, welches veranlasst, dass ein Computer wie eine Informationsverarbeitungseinrichtung arbeitet, welche Inhalt von einem Inhaltsverteilungsserver über ein Netzwerk herunterlädt, wobei das Programm veranlasst, dass der Computer das Verfahren nach Anspruch 26 ausführt.

30. Programm, welches veranlasst, dass ein Computer wie eine Informationsverarbeitungseinrichtung arbeitet, welche Inhalt von einem Inhaltsverteilungsserver über ein Netzwerk herunterlädt, wobei das Programm veranlasst, dass der Computer das Verfahren nach Anspruch 27 ausführt.

31. Programm, welches veranlasst, dass ein Computer wie eine Informationsverarbeitungseinrichtung arbeitet, welche Inhalt von einem Inhaltsverteilungsserver über ein Netzwerk herunterlädt, wobei das Programm veranlasst, dass der Computer das Verfahren nach Anspruch 28 ausführt.

## Revendications

1. Dispositif de traitement d'information (20) pour télécharger un contenu provenant d'un serveur de distribution de contenu (30) par l'intermédiaire d'un réseau (5), comportant :
une unité de montage (260) pour monter de façon amovible un support de stockage (7) sur celui-ci ;
une unité de téléchargement (200 : 22) agencée pour recevoir un contenu à télécharger provenant dudit serveur de distribution de contenu, et pour enregistrer ledit contenu reçu dans un fichier de contenu (100) sur ledit support de stockage ;
une unité de traitement d'interruption (200 : 23) agencée pour enregistrer une information de reprise (108) dans ledit fichier de contenu sur ledit support de stockage, ladite information de reprise étant une information nécessaire pour reprendre un téléchargement de contenu interrompu au cas où la réception dudit contenu depuis le ledit serveur de distribution de contenu par ladite unité de téléchargement est interrompue ; et
une unité de traitement de reprise (200 : 24) agencée pour lire ladite information de reprise depuis ledit fichier de contenu sur le support de stockage en cas de reprise de la réception dudit contenu interrompue, et pour transmettre une requête de transmission pour ledit contenu interrompu audit serveur de distribution de contenu, en fonction de ladite information de reprise lue ;
dans lequel ladite unité de téléchargement reçoit ledit contenu interrompu transmis depuis ledit serveur de distribution de contenu conformément à la requête de transmission pour ledit contenu interrompu, et enregistre ledit contenu interrompu reçu dans ledit fichier de contenu sur ledit support de stockage.

2. Dispositif de traitement d'information (20) pour télécharger un contenu provenant d'un serveur de distribution de contenu (30) par l'intermédiaire d'un réseau (5), comportant :
une unité de montage (260) pour monter de façon amovible un support de stockage (7) dans celui-ci ;
une unité de téléchargement (200 : 22) agencée pour recevoir un contenu à télécharger depuis ledit serveur de distribution de contenu, et pour enregistrer ledit contenu reçu dans un fichier de contenu sur ledit support de stockage ;
une unité de traitement d'interruption (200 : 23) agencée pour enregistrer une information de reprise (108) dans ledit fichier de contenu sur ledit support de stockage, ladite information de reprise étant une information nécessaire pour reprendre ledit téléchargement de contenu au cas où la réception dudit contenu depuis ledit serveur de distribution de contenu par ladite unité de téléchargement est interrompue.

3. Dispositif de traitement d'information selon la revendication 2, dans lequel ladite information de reprise comprend une information d'adresse de la source de téléchargement dudit contenu.

4. Dispositif de traitement d'information selon la revendication 2, dans lequel ladite unité de traitement d'interruption enregistre une information d'identification d'interruption disant que ladite réception de contenu par ladite unité de téléchargement n'a pas été achevée dans ledit support de stockage.

5. Dispositif de traitement d'information selon la revendication 4, dans lequel ladite unité de traitement d'interruption réécrit l'information concernant le format de données dans ledit fichier de contenu mémorisé sur ledit support de stockage dans ladite information d'identification d'interruption ;
et dans lequel ladite unité de traitement d'interruption enregistre une information de sauvegarde de l'information concernant le format de données avant la réécriture sur ledit support de stockage en tant qu'information de reprise.

6. Dispositif de traitement d'information selon la revendication 2, dans lequel ladite information de reprise comprend une information de quantité de données pour recevoir les données dudit contenu.

7. Dispositif de traitement d'information selon la revendication 2, dans lequel ladite information de reprise comprend une information de contrôle de changement correspondant audit contenu reçu depuis ledit serveur de distribution de contenu.

8. Dispositif de traitement d'information selon la revendication 2, dans lequel ladite unité de traitement d'interruption enregistre ladite information de reprise correspondant au contenu interrompu sur ledit support de stockage au cas où ladite réception de contenu provenant dudit serveur de distribution de contenu par ladite unité de téléchargement est interrompue.

9. Dispositif de traitement d'information selon la revendication 2, dans lequel ladite unité de traitement d'interruption met à jour ladite information de reprise correspondant au contenu reçu, qui est enregistrée sur ledit support de stockage, uniquement à chaque fois qu'une quantité prédéterminée desdites données de contenu est reçue, pendant la réception dudit contenu provenant dudit serveur de distribution de contenu par ladite unité de téléchargement.

10. Dispositif de traitement d'information selon la revendication 2, dans lequel ladite unité de téléchargement reçoit une information d'attribut de contenu nécessaire pour l'utilisation dudit contenu provenant dudit serveur de distribution de contenu et l'enregistre sur ledit support de stockage, à la suite de quoi l'unité de téléchargement reçoit ledit contenu et l'enregistre sur ledit support de stockage.

11. Dispositif de traitement d'information selon la revendication 10, comportant en outre :
une unité de lecture (200 : 27, 220, 230) agencée pour lire ledit contenu mémorisé sur ledit support de stockage ;
dans lequel ladite unité de lecture est agencée pour lire les données reçues du contenu interrompu, en utilisant ladite information d'attribut de contenu correspondant au contenu interrompu, au cas où la réception dudit contenu provenant dudit serveur de distribution de contenu par ladite unité de téléchargement est interrompue.

12. Dispositif de traitement d'information (20) pour télécharger un contenu provenant d'un serveur de distribution de contenu (30) par l'intermédiaire d'un réseau (5), comportant :
une unité de montage (260) pour monter de façon amovible un support de stockage (7) dans celui-ci ;
une unité de traitement de reprise (200 : 24) agencée pour lire une information de reprise provenant d'un fichier de contenu sur ledit support de stockage lorsqu'un contenu interrompu est mémorisé, ledit contenu interrompu étant un contenu qui a été partiellement enregistré sur ledit support de stockage avant une interruption de la réception depuis ledit serveur de distribution de contenu, ladite information de reprise étant une information nécessaire pour reprendre un téléchargement du contenu interrompu, et ladite unité de traitement de reprise étant en outre agencée pour transmettre une requête de transmission pour ledit contenu interrompu audit serveur de distribution de contenu en fonction de ladite information de reprise lue ; et
une unité de téléchargement agencée pour recevoir ledit contenu interrompu transmis depuis ledit serveur de distribution de contenu conformément à la requête de transmission pour ledit contenu interrompu, et pour enregistrer ledit contenu interrompu reçu dans ledit fichier de contenu sur ledit support de stockage.

13. Dispositif de traitement d'information selon la revendication 12, dans lequel ladite information de reprise comprend une information d'adresse de la source de téléchargement dudit contenu ;
et dans lequel ladite unité de téléchargement est agencée pour accéder audit contenu interrompu mémorisé dans ledit serveur de distribution de contenu, en fonction de ladite information d'adresse.

14. Dispositif de traitement d'information selon la revendication 12, dans lequel ladite unité de traitement de reprise détermine si oui ou non le contenu est ledit contenu interrompu, en fonction du fait que l'information d'identification d'interruption correspondant au contenu mémorisé sur le support de stockage est mémorisée ou non sur ledit support de stockage.

15. Dispositif de traitement d'information selon la revendication 14, dans lequel ladite unité de traitement de reprise lit l'information concernant le format de données dans le fichier de contenu lors de la réception des instructions de sélection pour le contenu mémorisé sur ledit support de stockage, et au cas où l'information concernant le format de données est ladite information d'identification d'interruption, une requête de transmission pour ledit contenu est transmise audit serveur de distribution de contenu.

16. Dispositif de traitement d'information selon la revendication 15, dans lequel ladite unité de traitement de reprise réécrit ladite information d'identification d'interruption dans ledit fichier de contenu interrompu dans l'information concernant le format de données ajoutée préalablement audit contenu interrompu, au cas où la réception dudit contenu interrompu par ladite unité de téléchargement a été achevée.

17. Dispositif de traitement d'information selon la revendication 16, dans lequel ladite information de reprise comprend une information de sauvegarde pour ladite information concernant le format de données ;
et dans lequel ladite unité de traitement de reprise renvoie ladite information d'identification d'interruption à ladite information concernant le format de données, en fonction de ladite information de sauvegarde.

18. Dispositif de traitement d'information selon la revendication 12, dans lequel ladite information de reprise comprend une information de quantité de données pour les données reçues dudit contenu interrompu ;
dans lequel ladite unité de traitement de reprise lit l'information de quantité de données pour lesdites données reçues depuis ledit support de stockage, et transmet une information de plage de données non reçue, qui est générée en fonction de l'information de quantité de données, audit serveur de distribution de contenu ;
et dans lequel ladite unité de téléchargement reçoit les données non reçues dudit contenu interrompu depuis ledit serveur de distribution de contenu.

19. Dispositif de traitement d'information selon la revendication 12, dans lequel ladite information de reprise comprend une information de contrôle de changement correspondant audit contenu interrompu reçu depuis ledit serveur de distribution de contenu avant l'instant de ladite interruption ;
dans lequel ladite unité de traitement de reprise lit ladite information de contrôle de changement depuis le ledit support de stockage et la transmet audit serveur de distribution de contenu en cas de reprise de ladite réception de contenu interrompu ;
et dans lequel ladite unité de téléchargement reçoit toutes les données ou les données non reçues dudit contenu interrompu depuis ledit serveur de distribution de contenu, en fonction des résultats de la comparaison où ladite information de contrôle de changement avec ledit serveur de distribution de contenu et la nouvelle information de contrôle de changement correspondant audit contenu interrompu sont comparées.

20. Dispositif de traitement d'information selon la revendication 12, dans lequel ladite information de reprise comprend une information de contrôle de changement correspondant audit contenu interrompu reçu depuis ledit serveur de distribution de contenu avant l'instant de ladite interruption ;
dans lequel ladite unité de traitement de reprise lit ladite information de contrôle de changement depuis ledit support de stockage en cas de reprise de la réception dudit contenu interrompu, et reçoit la nouvelle information de contrôle de changement correspondant audit contenu interrompu depuis ledit serveur de distribution de contenu, et en fonction des résultats de la comparaison à partir d'une comparaison entre ladite information de contrôle de changement lue et ladite nouvelle information de contrôle de changement, une requête de transmission pour toutes les données ou les données non reçues dudit contenu interrompu est transmise audit serveur de distribution de contenu.

21. Dispositif de traitement d'information selon la revendication 12, dans lequel ladite unité de traitement de reprise efface ladite information de reprise mémorisée dans ledit support de stockage au cas où la réception dudit contenu interrompu par ladite unité de téléchargement a été achevée.

22. Dispositif de traitement d'information selon la revendication 12, comportant en outre :
une unité d'horloge (200 : 26) configurée pour mesurer le point horaire courant ;
dans lequel ladite unité de traitement de reprise lit une information de période valide correspondant audit contenu interrompu mémorisé dans ledit support de stockage, compare le point horaire courant mesuré par ladite unité d'horloge et ladite information de période valide, et au cas où ledit point horaire courant se trouve à l'intérieur de la période valide, transmet une requête de transmission pour ledit contenu interrompu audit serveur de distribution de contenu.

23. Dispositif de traitement d'information selon la revendication 12, dans lequel ladite unité de traitement de reprise détermine si oui ou non l'identificateur d'utilisateur ajouté audit support de stockage et un identificateur d'utilisateur ajouté audit contenu interrompu sont identiques, et au cas où les deux identificateurs d'utilisateur sont identiques, une requête de transmission pour ledit contenu interrompu est transmise audit serveur de distribution de contenu.

24. Dispositif de traitement d'information selon la revendication 12, comportant en outre :
une unité de lecture (200 : 27, 220, 230) agencée pour lire ledit contenu mémorisé sur ledit support de stockage ;
dans lequel une information d'attribut de contenu nécessaire pour l'utilisation dudit contenu interrompu est mémorisée sur ledit support de stockage ;
et dans lequel ladite unité de lecture lit les données reçues dudit contenu interrompu, en utilisant ladite information d'attribut de contenu.

25. Dispositif de traitement d'informations selon la revendication 12, comportant en outre :
une unité de lecture (200 : 27,220, 230) agencés pour lire ledit contenu mémorisé sur ledit support de stockage ;
dans lequel une information d'attribut de contenu nécessaire pour l'utilisation dudit contenu interrompu est stockée sur ledit support de stockage ;
et dans lequel les données reçues à partir dudit contenu interrompu sont lues en utilisant ladite information d'attribut de contenu grâce à ladite unité de lecture, tout en recevant les données non reçues dudit contenu interrompu provenant dudit serveur de distribution de contenu, par ladite unité de téléchargement.

26. Procédé de téléchargement pour un dispositif de traitement d'information (20) téléchargeant un contenu depuis un serveur de distribution de contenu (30) par l'intermédiaire d'un réseau (5), comportant les étapes consistant à :
recevoir un contenu à télécharger à partir dudit serveur de distribution de contenu tout en enregistrant ledit contenu reçu dans un fichier de contenu (100) sur un support de stockage (7) monté de façon amovible dans ledit dispositif de traitement d'information ;
enregistrer une information de reprise (108) dans ledit fichier de contenu sur ledit support de stockage, ladite information de reprise étant une information nécessaire pour reprendre le téléchargement du contenu interrompu au cas où la réception dudit contenu depuis ledit serveur de distribution de contenu est interrompue ;
lire ladite information de reprise à partir dudit fichier de contenu sur ledit support de stockage en cas de reprise de la réception dudit contenu interrompu qui est mémorisée sur ledit support de stockage ;
transmettre une requête de transmission pour ledit contenu interrompu audit serveur de distribution de contenu en fonction de ladite information de reprise lue ; et
recevoir ledit contenu interrompu transmis depuis ledit serveur de distribution de contenu conformément à la requête de transmission pour ledit contenu interrompu, et enregistrer ledit contenu interrompu reçu dans ledit fichier de contenu sur ledit support de stockage.

27. Procédé d'interruption de téléchargement pour un dispositif de traitement d'information (20) téléchargeant un contenu à partir d'un serveur de distribution de contenu (30) par l'intermédiaire d'un réseau (5), comportant les étapes consistant à :
recevoir un contenu à télécharger à partir dudit serveur de distribution de contenu tout en enregistrant ledit contenu reçu dans un fichier de contenu (100) sur un support de stockage (7) monté de façon amovible dans ledit dispositif de traitement d'information ; et
enregistrer une information de reprise (108) dans ledit fichier de contenu sur ledit support de stockage, ladite information de reprise étant une information nécessaire pour reprendre ledit téléchargement de contenu au cas où la réception dudit contenu à partir dudit serveur de distribution de contenu est interrompue.

28. Procédé de reprise de téléchargement pour un dispositif de traitement d'information (20) téléchargeant un contenu depuis un serveur de distribution de contenu (30) par l'intermédiaire d'un réseau (de réseaux), comportant les étapes consistant à :
lire une information de reprise depuis un fichier de contenu (100) sur un support de stockage qui peut se séparer dudit dispositif de traitement d'information, ledit fichier de contenu étant un fichier dans lequel un contenu interrompu est mémorisé, ledit contenu interrompu étant un contenu qui a été partiellement enregistré sur ledit support de stockage avant que l'interruption de la réception depuis ledit serveur de distribution de contenu ait été interrompue, et une information de reprise étant une information nécessaire pour reprendre le téléchargement du contenu interrompu ;
transmettre une requête de transmission pour ledit contenu interrompu en fonction de ladite information de reprise lue audit serveur de distribution de contenu ; et
recevoir ledit contenu interrompu transmis depuis ledit serveur de distribution de contenu conformément à la requête de transmission pour ledit contenu interrompu, et enregistrer ledit contenu interrompu reçu dans ledit fichier de contenu sur ledit support de stockage.

29. Programme amenant un ordinateur à fonctionner comme un dispositif de traitement d'information téléchargeant un contenu depuis un serveur de distribution de contenu par l'intermédiaire d'un réseau, le programme amenant l'ordinateur à exécuter le procédé selon la revendication 26.

30. Programme amenant un ordinateur à fonctionner comme un dispositif de traitement d'information téléchargeant un contenu depuis un serveur de distribution de contenu par l'intermédiaire d'un réseau, le programme amenant l'ordinateur à exécuter le procédé selon la revendication 27.

31. Programme amenant un ordinateur à fonctionner comme un dispositif de traitement d'information téléchargeant un contenu depuis un serveur de distribution de contenu par l'intermédiaire d'un réseau, le programme amenant l'ordinateur à exécuter le procédé selon la revendication 28.
